# EUROPÄISCHE PATENTSCHRIFT

(11) **EP 3 172 178 B1**
(45) Veröffentlichungstag und Bekanntmachung des Hinweises auf die Patenterteilung: **12.09.2018**
(21) Anmeldenummer: 15745161.8
(22) Anmeldetag: 14.07.2015
(51) Int. Cl.: C04B 26/32, C08L 83/04

(54) **HÄRTBARE ORGANOPOLYSILOXANZUSAMMENSETZUNGEN**
CURABLE ORGANOPOLYSILOXANE COMPOSITIONS
COMPOSÉS À BASE D'ORGANOPOLYSILOXANE DURCISSABLES

(30) Priorität: 23.07.2014 DE 102014214408
(43) Veröffentlichungstag der Anmeldung: 31.05.2017
(73) Patentinhaber: Wacker Chemie AG, 81737 München (DE)
(72) Erfinder: SCHILDBACH, Daniel, 84503 Altötting (DE); OSTENDORF, Detlev, 01129 Dresden (DE); PRASSE, Marko, 01612 Glaubitz (DE); SCHEIM, Uwe, 01640 Coswig (DE)
(74) Vertreter: Budczinski, Angelika
(86) Internationale Anmeldenummer: PCT/EP2015/066046
(87) Internationale Veröffentlichungsnummer: WO 2016/012305

(56) Entgegenhaltungen:
- EP-A1- 0 566 936
- WO-A1-2013/106193
- WO-A1-2013/153773
- WO-A2-2010/146252
- "Silicones", 15. April 2003 (2003-04-15), ENCYCLOPEDIA OF POLYMER SCIENCE AND TECHNOLOGY, WILEY, US, PAGE(S) 765 - 841, XP007918236, Seiten 801-805

## Beschreibung

Die Erfindung betrifft durch Kondensationsreaktion härtbare Organopolysiloxanzusammensetzungen, Verfahren zu deren Herstellung sowie deren Verwendung, insbesondere zur Herstellung künstlicher Steine.

Organopolysiloxanharze, die kondensierbare reaktive Silyleinheiten, z.B. Hydroxygruppen, und hydrolysierbare Reste, wie Alkoxygruppen, enthalten, werden typischerweise in Gegenwart von Katalysatoren, wie etwa Zink-, Blei-, Cobalt- oder Titanverbindungen, durch Polykondensationsreaktion vernetzt. Hierzu sei beispielsweise auf A. Tomanek, Silicone&Technik, [Hrsg. Wacker Chemie GmbH, München] - München, Wien Hanser, 1990 (ISBN 3-446-16032-9), Seiten 72 und 73, verwiesen.

Ebenfalls geeignet sind Organosilane bzw. Organopolysiloxane, die u.a. eine Guanidyleinheit enthalten und welche in der Literatur als effektive, alternative metallfreie Härtungsbeschleuniger beschrieben werden. Beispiele hierfür sind in US-A-4 248 993, WO 2010/146252 und US-B-8 372 935 zu finden.

Weiterhin werden in WO-A 2013/101751 und den in dieser Veröffentlichung als Stand der Technik genannten Schriften Zink(II)- und Zirkonium(IV)-Verbindungen oder -Salze sowie weitere Metalle als Kondensationskatalysatoren für Polyorganosiloxansysteme beschrieben.

Diese Härtungsbeschleuniger- bzw. Katalysatorsysteme haben den Nachteil, dass sie, wenn man sie in einer zur Erzielung einer genügend schnellen Aushärtung bei erhöhten Temperaturen ausreichenden Menge einsetzt, bereits bei Raumtemperatur aktiv sind und bei Gegenwart von Silanol- und gegebenenfalls Alkoxysilyl-Einheiten unmittelbar die Polykondensationsreaktion und damit die Aushärtung der Polyorganosiloxan-Zusammensetzungen beschleunigen, wodurch die Verarbeitungszeit, ausgedrückt durch die sogenannte Topfzeit ("Potlife") der Mischungen sehr kurz ist, so dass die Weiterverarbeitung der vorzeitig vernetzten Polyorganosiloxanzusammensetzungen, z.B. bei einem sich anschließenden Formgebungsprozess, schwierig ist.

Überraschenderweise wurde gefunden, dass eine Kombination aus starken Katalysatoren wie Guanidinen oder Amidinen und metallhaltigen Katalysatoren wie Metallchelaten wie Zink(II)-acetylacetonat oder Metallsalze organischer Säuren wie Zink(II)-(2-ethylhexanoat) bei Raumtemperatur nur geringe katalytische Wirkung zeigt, während bei erhöhter Temperatur dennoch eine sehr schnelle Aushärtung der Mischungen vonstatten geht. Eine sich anschließende Nachhärtung von Formkörpern bei Raumtemperatur wird gleichfalls überraschenderweise nicht inhibiert oder sogar beschleunigt.

Gegenstand der Erfindung sind durch Kondensationsreaktion vernetzbare Zusammensetzungen (Z) enthaltend
(A) mindestens eine Organosiliciumkomponente bestehend aus Einheiten der Formel

   Rₐ(OH)_{b}(R¹O)_{c}SiO_{(4-a-b-c)/2} (I),

   worin
   R gleich oder verschieden sein kann und einen einwertigen, SiC-gebundenen, gegebenenfalls substituierten Kohlenwasserstoffrest mit 1 bis 18 C-Atomen, einen zweiwertigen, gegebenenfalls substituierten, SiC-gebundenen Kohlenwasserstoffrest mit 1 bis 18 C-Atomen oder Si-gebundenes Halogenatom bedeutet,
   R¹ gleich oder verschieden sein kann und einen einwertigen, gegebenenfalls substituierten Kohlenwasserstoffrest bedeutet,
   a 0, 1, 2 oder 3, bevorzugt 0, 1 oder 2, ist,
   b 0, 1, 2 oder 3, bevorzugt 0, 1 oder 2, besonders bevorzugt 0 oder 1, ist und
   c 0, 1, 2 oder 3 ist,
   mit der Maßgabe, dass in Formel (I) die Summe a+b+c<4 ist,
   in der Organosiliciumkomponente (A) der Verzweigungsgrad, definiert als das Verhältnis aus der Summe der Einheiten der Formel (I) mit a gleich 0 oder 1 zu der Summe aller Einheiten der Formel (I), mindestens 0,5 beträgt und in der Organosiliciumkomponente (A) in mindestens 1% aller Einheiten der Formel (I) die Summe b+c ≥1 ist,
(B) mindestens eine Metallverbindung ausgewählt aus Verbindungen von Metallen der 3., 4. und 5. Hauptgruppe sowie der 2., 4., 5., 7. und 8. Nebengruppe in den Oxidationsstufen +2 bis +5, die mindestens ein Kohlenstoffatom enthalten in einer Oxidationsstufe <4, und
(C) mindestens eine Stickstoffverbindung, ausgewählt aus Guanidinen und Amidinen.

Beispiele für Kohlenwasserstoffreste R sind Alkylreste, wie der Methyl-, Ethyl-, n-Propyl-, Isopropyl-, n-Butyl-, sec-Butyl-, iso-Butyl-, tert.-Butyl-, n-Pentyl-, sec-Pentyl, isoPentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Alkenylreste, wie der Vinyl-, 1-Propenyl-, 2-Propenyl, n-5-Hexenyl-, 4-Vinylcyclohexyl- und der 3-Norbornenylrest; Arylreste, wie der Phenyl-, Naphthyl-, Anthryl- und Phenanthrylrest; Alkarylreste, wie der o-, m- und p-Tolyl-, Xylyl-, Mesitylenyl- und o-, m- und p-Ethylphenylrest; und Aralkylreste, wie der Benzylrest, der α- und der β-Phenylethylrest.

Beispiele für substituierte Kohlenwasserstoffreste R sind Halogenalkylreste, wie der 3,3,3-Trifluor-n-propyl-, der 2,2,2,2',2',2'-Hexafluorisopropyl- und der Heptafluorisopropylrest; Halogenarylreste, wie der o-, m- und p-Chlorphenylrest; gamma-funktionalisierte Propylreste, wie der 3-Aminopropyl-, der N-(2-Aminoethyl)-3-aminopropyl-, der N-Cyclohexyl-3-aminopropyl-, der 3-Glycidoxypropyl-, der 3-Mercaptopropyl- und der 3-Methacryloxypropylrest; funktionalisierte Methylreste, wie der N-Cyclohexylaminomethyl-, der N-Phenylaminomethyl-, der Methacryloxymethyl und der Morpholinomethylrest; sowie silylsubstituierte Alkylreste, wie der 3-Trimethoxysilylpropyl-, der 3-Triethoxysilylpropyl-, der 3-Dimethoxymethylsilylpropyl-, der 3-Diethoxymethylsilylpropyl-, der 2-Trimethoxysilylethyl-, der 2-Triethoxysilylethylrest, der 2-Trimethoxysilylethenyl- und der 2-Triethoxysilylethenylrest.

Beispiele für zweiwertige Kohlenwasserstoffreste R sind der Methylen-, Ethylen- und Propylenrest sowie der 1,2-Ethendiylrest.

Herstellungsbedingt kann auch ein gewisser Anteil der Reste R die Bedeutung von Si-gebundenem Halogenatom, insbesondere Chloratom, haben, was jedoch nicht bevorzugt ist.

Bevorzugt handelt es sich bei Rest R um einwertige, SiC-gebundene Kohlenwasserstoffreste mit 1 bis 18 Kohlenstoffatomen, die gegebenenfalls mit Halogenatomen, Hydroxygruppen, Aminogruppen, Ethergruppen, Estergruppen, Epoxygruppen, Mercaptogruppen oder Cyanogruppen substituiert sind, sowie um zweiwertige, SiC-gebundene Kohlenwasserstoffreste mit 1 bis 18 Kohlenstoffatomen, besonders bevorzugt um einwertige und zweiwertige, SiC-gebundene Kohlenwasserstoffreste mit 1 bis 18 Kohlenstoffatomen, insbesondere um den Methyl-, Ethyl-, n-Propyl-, Isopropyl-, n-Octyl-, 2,4,4-Trimethylpentyl-, Ethylen-, 1,2-Ethendiyl-, Vinyl- oder Phenylrest.

Ganz besonders bevorzugt handelt es sich bei Rest R um den Methyl-, Ethyl-, n-Octyl-, 2,4,4-Trimethylpentyl-, Vinyl- oder Phenylrest.

Insbesondere besonders bevorzugt handelt es sich bei Rest R um den Methyl-, 2,4,4-Trimethylpentyl- oder Phenylrest.

Beispiele für Rest R¹ sind die für R genannten einwertigen Kohlenwasserstoffreste.

Bevorzugt handelt es sich bei Rest R¹ um einwertige Kohlenwasserstoffreste mit 1 bis 18 Kohlenstoffatomen, besonders bevorzugt um den Methyl-, Ethyl-, n-Propyl-, Isopropyl-, n-Butyl-, sec-Butyl-, tert.-Butyl- oder iso-Butylrest, insbesondere um den Methyl- oder Ethylrest.

Die erfindungsgemäß eingesetzte Organosiliciumkomponente (A) kann unterschiedliche Arten von Einheiten der Formel (I) enthalten, wie z.B. Einheiten mit b=c=0, Einheiten mit b=c=1, Einheiten mit b=0 und c≠0 sowie Einheiten mit b≠0 und c=0.

In der erfindungsgemäß eingesetzten Organosiliciumkomponente (A) beträgt der Verzweigungsgrad, definiert als das Verhältnis aus der Summe der Einheiten der Formel (I) mit a gleich 0 oder 1 zu der Summe aller Einheiten der Formel (I), bevorzugt mindestens 0,7, besonders bevorzugt 0,8 bis 1,0, insbesondere 0,9 bis 1,0.

In der erfindungsgemäß eingesetzten Komponente (A) ist bevorzugt in mindestens 3%, besonders bevorzugt in mindestens 5%, insbesondere in mindestens 10%, aller Einheiten der Formel (I) die Summe aus b+c ≥1.

Bevorzugt enthält die erfindungsgemäß eingesetzte Organosiliciumkomponente (A) Einheiten ausgewählt aus RSiO_{3/2}, RSi(OR¹)O_{2/2}, RSi(OH)O_{2/2}, RSi(OR¹)₂O_{1/2}, RSi(OH)(OR¹)O_{1/2}, R₂SiO_{2/2}, R₂(OH)SiO_{1/2}, R₂(OR¹)SiO_{1/2}, R₃SiO_{1/2}, SiO_{4/2}, Si(OH)O_{3/2}, Si(OR¹)O_{3/2}, Si(OR¹)₂O_{2/2}, Si(OR¹)(OH)O_{2/2}, Si(OR¹)₂(OH)O_{1/2}, Si(OR¹)₃O_{1/2} und O_{3/2}SiRSiO_{3/2}, wobei Komponente (A) besonders bevorzugt aus Einheiten ausgewählt aus RSiO_{3/2}, RSi(OR¹)O_{2/2}, RSi(OH)O_{2/2}, RSi(OR¹)₂O_{1/2}, RSi(OH)(OR¹)O_{1/2}, R₂SiO_{2/2}, R₂(OH)SiO_{1/2} und R₂(OR¹)SiO_{1/2} besteht mit R und R¹ gleich der obengenannten Bedeutung.

In einer weiteren besonders bevorzugten Variante besteht Komponente (A) aus Einheiten ausgewählt aus R₃SiO_{1/2}, SiO_{4/2}, Si(OH)O_{3/2}, Si(OR¹)O_{3/2}, Si(OR¹)₂O_{2/2}, Si(OR¹)(OH)O_{2/2} und Si(OR¹)₂(OH)O_{1/2} mit R und R¹ gleich der obengenannten Bedeutung.

Die erfindungsgemäß eingesetzte Organosiliciumkomponente (A) kann nur eine Art von Siloxan bestehend aus Einheiten der Formel (I) enthalten wie auch Gemische unterschiedlicher Arten von Siloxanen bestehend aus Einheiten der Formel (I), mit der Maßgabe, dass in der Organosiliciumkomponente (A) der Verzweigungsgrad mindestens 0,5 beträgt und in der Organosiliciumkomponente (A) in mindestens 1% aller Einheiten der Formel (I) die Summe b+c ≥1 ist, wobei Gemische bevorzugt sind. In den einzelnen Siloxanmolekülen sind die Einheiten der Formel (I) bevorzugt statistisch verteilt.

Bei den Siloxanen, welche in Komponente (A) enthalten sind, handelt es sich bevorzugt um verzweigte Siloxane, wobei solche mit harzartiger Struktur besonders bevorzugt sind.

Die erfindungsgemäß eingesetzte Organosiliciumkomponente (A) besteht bevorzugt ausschließlich aus Siloxanen mit einem Verzweigungsgrad von mindestens 0,5, besonders bevorzugt mindestens 0,7, insbesondere 0,8 bis 1,0, ganz besonders bevorzugt 0,9 bis 1,0.

Die erfindungsgemäß eingesetzte Komponente (A) besteht bevorzugt ausschließlich aus Siloxanen, bei denen bevorzugt in mindestens 3%, besonders bevorzugt in mindestens 5%, insbesondere in mindestens 10%, aller Einheiten der Formel (I) die Summe aus b+c≥1 ist.

Falls als Organosiliciumkomponente (A) Mischungen aus verschiedenen Siloxanen eingesetzt werden, wird das Mischen bevorzugt bei erhöhter Temperatur, besonders bevorzugt bei 50°C bis 100°C durchgeführt. Zum Entfernen von herstellungsbedingt enthaltenen Lösungsmittelspuren kann das Mischen bei erhöhter Temperatur und gleichzeitig bei vermindertem Druck durchgeführt werden.

Die erfindungsgemäß eingesetzte Organosiliciumkomponente (A) weist bevorzugt sowohl Si-gebundene Hydroxy- als auch Si-gebundene (R¹O)-Gruppen auf, wobei R¹ die in Formel (I) angegebene Bedeutung hat.

Die erfindungsgemäß eingesetzte Organosiliciumkomponente (A) weist bevorzugt höchstens 40 Gew.-%, besonders bevorzugt 1 bis 30 Gew.-%, insbesondere 5 bis 20 Gew.-%, Si-gebundene (R¹O)-Gruppen auf, wobei R¹ die in Formel (I) angegebene Bedeutung hat.

Bevorzugt enthält die erfindungsgemäß eingesetzte Komponente (A) Siloxane (A1) bestehend aus Einheiten der Formel

Rₐ(OH)_{b}(R¹O)_{c}SiO_{(4-a-b-c)/2} (I),

worin
R gleich oder verschieden sein kann und einen einwertigen, SiC-gebundenen, gegebenenfalls substituierten Kohlenwasserstoffrest mit 1 bis 18 C-Atomen, einen zweiwertigen, gegebenenfalls substituierten, SiC-gebundenen Kohlenwasserstoffrest mit 1 bis 18 C-Atomen oder Si-gebundenes Halogenatom bedeutet,
R¹ gleich oder verschieden sein kann und einen einwertigen, gegebenenfalls substituierten Kohlenwasserstoffrest bedeutet,
a 0, 1, 2 oder 3, bevorzugt 0, 1 oder 2, ist,
b 0, 1, 2 oder 3, bevorzugt 0, 1 oder 2, besonders bevorzugt 0 oder 1, ist und
c 0, 1, 2 oder 3 ist,
mit der Maßgabe, dass in Formel (I) die Summe a+b+c<4 ist,
in den Siloxanen (A1) jeweils der Verzweigungsgrad, definiert als das Verhältnis aus der Summe der Einheiten der Formel (I) mit a gleich 0 oder 1 zu der Summe aller Einheiten der Formel (I), mindestens 0,5 beträgt, die Siloxane (A1) mindestens eine Einheit der Formel (I) mit b+c ≥1 aufweisen und in den Siloxanen (A1) in mindestens 1% aller Einheiten der Formel (I) die Summe b+c ≥1 ist.

Die erfindungsgemäß eingesetzte Komponente (A) besteht bevorzugt zu 80 Gew.-%, besonders bevorzugt zu 100 Gew.-%, aus Siloxanen (A1).

Beispiele für Siloxane, welche in Komponente (A) enthalten sein können, sind
(MeSiO_{3/2})_{0,88}(MeSi(OH)O_{2/2})_{0,05}(MeSi(OEt)O_{2/2})_{0,06}(Me₂SiO_{2/2})_{0,01} mit Mw = 6600 g/mol, Mn = 2000 g/mol und Mw/Mn = 3,3; (MeSiO_{3/2})_{0,81}(MeSi(OH)O_{2/2})_{0,03}(MeSi(OMe)O_{2/2})_{0,16} mit Mw = 5400 g/mol, Mn = 1900 g/mol und Mw/Mn = 2,8;
(MeSiO_{3/2})_{0,86}(MeSi(OH)O_{2/2})_{0,02}(MeSi(OEt)O_{2/2})_{0,10}(Me₂SiO_{2/2})_{0,02} mit Mw = 10000 g/mol, Mn = 2300 g/mol und Mw/Mn = 4,3;
(MeSiO_{3/2})_{0,81}(MeSi(OH)O_{2/2})_{0,04}(MeSi(OEt)O_{2/2})_{0,05}(Me₂SiO_{2/2})_{0,10} mit Mw = 6500 g/mol, Mn = 1900 g/mol und Mw/Mn = 3,4;
(MeSiO_{3/2})_{0,88}(MeSi(OH)O_{2/2})_{0,05}(MeSi(OMe)O_{2/2})_{0,06}(Me₂SiO_{2/2})_{0,01} mit Mw = 6700 g/mol, Mn = 2100 g/mol und Mw/Mn = 3,2;
(MeSiO_{3/2})_{0,88}(MeSi(OH)O_{2/2})_{0,05}(MeSi(OMe)O_{2/2})_{0,06}(Me₂SiO_{2/2})_{0,01} mit Mw = 9000 g/mol, Mn = 2300 g/mol und Mw/Mn = 3,9;
(MeSiO_{3/2})_{0,33}(MeSi(OH)O_{2/2})_{0,05}(MeSi(OEt)O_{2/2})_{0,01}(Me₂SiO_{2/2})_{0,06} (PhSiO_{3/2})_{0,24}(PhSi(OH)O_{2/2})_{0,28}(PhSi(OEt)O_{2/2})_{0,03} mit Mw = 3300 g/mol, Mn = 1300 g/mol und Mw/Mn = 2,5;
(MeSiO_{3/2})_{0,75}(PhSiO_{3/2})_{0,05}(MeSi(OH)O_{2/2})_{0,05}(PhSi(OH)O_{2/2})_{0,04} (Me-Si(OEt)O_{2/2})_{0,05}(PhSi(OEt)O_{2/2})_{0,03}(Me₂SiO_{2/2})_{0,03} mit Mw = 5600 g/mol, Mn = 1800 g/mol und Mw/Mn = 3,1;
(MeSiO_{3/2})_{0,34}(MeSi(OH)O_{2/2})_{0,03}(MeSi(OEt)O_{2/2})_{0,02}(PhSiO_{3/2})_{0,45} (PhSi(OH)O_{2/2})_{0,13}(PhSi(OEt)O_{2/2})_{0,03} mit Mw = 4700 g/mol, Mn = 1800 g/mol und Mw/Mn = 2,6;
(MeSiO_{3/2})_{0,27}(MeSi(OH)O_{2/2})_{0,03}(PhSiO_{3/2})_{0,34}(PhSi(OH)O_{2/2})_{0,14} PhSi(OEt)O_{2/2})_{0,02}(PhMeSiO_{2/2})_{0,17}(PhMeSi(OH)O_{1/2})_{0,03} mit Mw = 2400 g/mol, Mn = 1200 g/mol und Mw/Mn = 2,0;
(PhSiO_{3/2})_{0,45}(PhSi(OH)O_{2/2})_{0,44}PhSi(OEt)O_{2/2})_{0,09}(PhSi(OH)₂O_{1/2})_{0,02} mit Mw = 2900 g/mol, Mn = 1500 g/mol und Mw/Mn = 1,9;
(PhSiO_{3/2})_{0,48}(PhSi(OH)O_{2/2})_{0,17}(PhSi(OEt)O_{2/2})_{0,02} (CH₃(CH₂)₂SiO_{3/2})_{0,25}(CH₃(CH₂)₂Si(OH)O_{2/2})_{0,08} mit Mw = 1800 g/mol, Mn = 1300 g/mol und Mw/Mn = 1,4;
(MeSiO_{3/2})_{0,32}(MeSi(OH)O_{2/2})_{0,06}(MeSi(OEt)O_{2/2})_{0,01}(Me₂SiO_{2/2})_{0,06} (PhSiO_{3/2})_{0,23}(PhSi(OH)O_{2/2})_{0,29}(PhSi(OEt)O_{2/2})_{0,03} mit Mw = 1700 g/mol, Mn = 1200 g/mol und Mw/Mn = 1,4;
(PhSiO_{3/2})_{0,50}(PhSi(OH)O_{2/2})_{0,15}(PhSi(OEt)O_{2/2})_{0,02}(CH₃(CH₂)₂SiO_{3/2})_{0,26} (CH₃(CH₂)₂Si(OH)O_{2/2})_{0,07} mit Mw = 2800 g/mol, Mn = 1200 g/mol und Mw/Mn = 2,3;
(MeSiO_{3/2})_{0,37}(MeSi(OEt)O_{2/2})_{0,46}(MeSi(OEt)₂O_{1/2})_{0,17} mit Mw = 2400 g/mol, Mn = 900 g/mol und Mw/Mn = 2,7;
(MeSiO_{3/2})_{0,38}(MeSi(OEt)O_{2/2})_{0,46}(MeSi(OEt)₂O_{1/2})_{0,15}(Me₂SiO_{2/2})_{0,01} mit Mw = 2800 g/mol, Mn = 1000 g/mol und Mw/Mn = 2,8;
(MeSiO_{3/2})_{0,30}(MeSi(OMe)O_{2/2})_{0,47}(MeSi(OMe)₂O_{1/2})_{0,23} mit Mw = 2300 g/mol, Mn = 600 g/mol und Mw/Mn = 3,8;
(MeSiO_{3/2})_{0,32}(MeSi(OMe)O_{2/2})_{0,48}(MeSi(OMe)₂O_{1/2})_{0,20} mit Mw = 3300 g/mol, Mn = 900 g/mol und Mw/Mn = 3,7;
(PhSiO_{3/2})_{0,23}(PhSi(OMe)O_{2/2})_{0,51}(PhSi(OMe)₂O_{1/2})_{0,26} mit Mw = 1000 g/mol, Mn = 700 g/mol und Mw/Mn = 1,4;
(MeSiO_{3/2})_{0,10}(MeSi(OMe)O_{2/2})_{0,17}(MeSi(OMe)₂O_{1/2})_{0,03}(PhSiO_{3/2})_{0,15} (PhSi(OMe)O_{2/2})_{0,31}(PhSi(OMe)₂O_{1/2})_{0,20}(Me₂SiO_{2/2})_{0,04} mit Mw = 1800 g/mol, Mn = 900 g/mol und Mw/Mn= 2,0;
(MeSiO_{3/2})_{0,10}(MeSi(OMe)O_{2/2})_{0,15}(MeSi(OMe)₂O_{1/2})_{0,03} (MeSi(O(CH₂)₃CH₃)O_{2/2})_{0,03}(PhSiO_{3/2})_{0,15}(PhSi(OMe)O_{2/2})_{0,24} (PhSi(OMe)₂O_{1/2})_{0,15}(PhSi(O(CH₂)₃CH₃)O_{2/2})_{0,06} (PhSi(OMe)(O(CH₂)₃CH₃)O_{1/2})_{0,04}(PhSi(O(CH₂)₃CH₃)₂O_{1/2})_{0,01}(Me₂SiO_{2/2})_{0,0 4} mit Mw = 1400 g/mol, Mn = 800 g/mol und Mw/Mn = 1,8;
(MeSiO_{3/2})_{0,31}(MeSi(OEt)O_{2/2})_{0,34}(MeSi(OEt)₂O_{1/2})_{0,10}(Me₂SiO_{2/2})_{0,22} (Me₂Si(OEt)O_{1/2})_{0,03} mit Mw = 4500 g/mol, Mn = 1900 g/mol und Mw/Mn = 2,4;
(MeSiO_{3/2})_{0,71}(MeSi(OH)O_{2/2})_{0,03}(MeSi(OEt)O_{2/2})_{0,05}(Me₂SiO_{2/2})_{0,21} mit Mw = 5400 g/mol, Mn = 2200 g/mol und Mw/Mn = 2,5;
(i-OctSiO_{3/2})_{0,02}(i-OctSi(OMe)O_{2/2})_{0,04}(i-OctSi(OMe)₂O_{1/2})_{0,03}(Me-SiO_{3/2})_{0,50}(MeSi(OEt)O_{2/2})_{0,40}(MeSi(OH)O_{2/2})_{0,01} mit Mw = 6100 g/mol, Mn = 1500 g/mol und Mw/Mn = 4,2;
(i-OctSi(OMe)O_{2/2})_{0,11}(i-OctSi(OMe)₂O_{1/2})_{0,16}(MeSiO_{3/2})_{0,26}(Me-Si(OMe)O_{2/2})_{0,36}(MeSi(OMe)₂O_{1/2})_{0,11} mit Mw = 3000 g/mol, Mn = 1500 g/mol und Mw/Mn = 2,0;
(Si(OEt)₂O_{2/2})_{0,42}(Si(OEt)O_{3/2})_{0,19}(Si(OEt)₃O_{1/2})_{0,39} mit Mw = 1000 g/mol, Mn = 800 g/mol und Mw/Mn = 1,2;
(Si(OEt)₂O_{2/2})_{0,48}(Si(OEt)O_{3/2})_{0,35}(Si(OEt)₃O_{1/2})_{0,09}(SiO_{4/2})_{0,08} mit Mw = 1400 g/mol, Mn = 900 g/mol und Mw/Mn = 1,6;
(i-OctSi(OMe)O_{2/2})_{0,09}(i-OctSiO_{3/2})_{0,06}(i-OctSi(OMe)₂O_{1/2})_{0,08} (MeSiO_{3/2})_{0,23}(MeSi(OMe)O_{2/2})_{0,35}(MeSi(OMe)₂O_{1/2})_{0,19} mit Mw = 1400 g/mol, Mn = 600 g/mol und Mw/Mn = 2,3;
(i-OctSi(OMe)O_{2/2})_{0,12}(i-OctSiO_{3/2})_{0,05}(i-OctSi(OMe)₂O_{1/2})_{0,08} (MeSiO_{3/2})_{0,22}(MeSi(OMe)O_{2/2})_{0,33}(MeSi(OMe)₂O_{1/2})_{0,20} mit Mw = 1600 g/mol, Mn = 700 g/mol und Mw/Mn = 2,3;
(i-OctSi(OMe)O_{2/2})_{0,11}(i-OCtSiO_{3/2})_{0,05}(i-OctSi(OMe)₂O_{1/2})_{0,08} (MeSiO_{3/2})_{0,22}(MeSi(OMe)O_{2/2})_{0,33}(MeSi(OMe)₂O_{1/2})_{0,20} (i-OctSi (OH) O_{2/2})_{0,01} mit Mw = 1500 g/mol, Mn = 700 g/mol und Mw/Mn = 2,1;
(SiO_{4/2})_{0,50}(Me₃SiO_{1/2})_{0,39}(Si(OEt)O_{3/2})_{0,06}(Si(OEt)₂O_{2/2})_{0,02} (Si(OEt)₃O_{1/2})_{0,01}(Si(OH)O_{3/2})_{0,02} mit Mw = 7400 g/mol, Mn = 3100 g/mol und Mw/Mn = 2,4;
(SiO_{4/2})_{0,45}(Me₃SiO_{1/2})_{0,43}(Si(OEt)O_{3/2})_{0,07}(Si(OEt)₂O_{2/2})_{0,02} (Si(OEt)₃O_{1/2})_{0,01}(Si(OH)O_{3/2})_{0,02} mit Mw = 1400 g/mol, Mn = 900 g/mol und Mw/Mn = 1,6;
(SiO_{4/2})_{0,45}(Me₃SiO_{1/2})_{0,36}(ViMe₂SiO_{1/2})_{0,06}(Si(OEt)O_{3/2})_{0,06} (Si(OEt)₂O_{2/2})_{0,02}(Si(OEt)₃O_{1/2})_{0,01}(Si(OH)O_{3/2})_{0,04} mit Mw = 5300 g/mol, Mn = 2600 g/mol und Mw/Mn = 2,0; und
(SiO_{4/2})_{0,38}(Me₃SiO_{1/2})_{0,42}(ViMe₂SiO_{1/2})_{0,06}(Si(OEt)O_{3/2})_{0,07} (Si(OEt)₂O_{2/2})_{0,02}(Si(OEt)₃O_{1/2})_{0,01}(Si(OH)O_{3/2})_{0,04} mit Mw = 2600 g/mol, Mn = 1600 g/mol und Mw/Mn = 1,6;
(MeSiO_{3/2})_{0,65}(MeSi(OH)O_{2/2})_{0,01}(MeSi(OEt)O_{2/2})_{0,27}(MeSi(OEt)₂O_{1/2})_{0,01} (PhSiO_{3/2})_{0,02}(PhSi(OEt)O_{2/2})_{0,04} mit Mw = 10300 g/mol, Mn = 2100 g/mol und Mw/Mn = 4,9; und
(MeSiO_{3/2})_{0,66}(MeSi(OEt)O_{2/2})_{0,27}(MeSi(OEt)₂O_{1/2})_{0,01}(PhSiO_{3/2})_{0,02} (PhSi(OEt)O_{2/2})_{0,04} mit Mw = 16300 g/mol, Mn = 2300 g/mol und Mw/Mn = 7,1;
wobei Me gleich Methylrest, Et gleich Ethylrest, Vi gleich Vinylrest, i-Oct gleich 2,4,4-Trimethylpentylrest und Ph gleich Phenylrest bedeutet.

Die Siloxane, welche in der erfindungsgemäß eingesetzten Organosiliciumkomponente (A) enthalten sein können, weisen ein Gewichtsmittel Mw von bevorzugt 500 bis 20 000 g/mol, besonders bevorzugt von 500 bis 12 000 g/mol, insbesondere von 700 bis 9 000 g/mol, auf.

Die Siloxane, welche in der erfindungsgemäß eingesetzten Organosiliciumkomponente (A) enthalten sein können, weisen ein Zahlenmittel Mn von bevorzugt 200 bis 8 000 g/mol, besonders bevorzugt von 200 bis 5 000 g/mol, insbesondere von 500 bis 3 000 g/mol, auf.

Die Siloxane, welche in der erfindungsgemäß eingesetzten Organosiliciumkomponente (A) enthalten sein können, weisen Polydispersitäten Mw/Mn von bevorzugt 1 bis 6, besonders bevorzugt von 1 bis 5, auf.

In der vorliegenden Erfindung werden Gewichtsmittel Mw und Zahlenmittel Mn, gerundet auf ganze 100er Zahlen entsprechend DIN 1333:1992-02 Abschnitt 4, durch Gelpermeationschromatographie (GPC bzw. Size Exclusion Chromatographie (SEC)) entsprechend DIN 55672-1 bestimmt mit Polystyrol Standard und Brechungsindexdetektor (RI-Detektor). Wo nicht anders ausgewiesen wird THF als Elutionsmittel für phenylhaltige Komponenten und Toluol als Elutionsmittel für nicht-phenylhaltige Komponenten verwendet, und die Analysen werden bei einer Säulentemperatur von 45°C durchgeführt. Die Polydispersität ist der Quotient Mw/Mn.

Organosiliciumkomponente (A) kann bei 23°C und 1013 hPa sowohl fest als auch flüssig sein.

Die erfindungsgemäß eingesetzten Verbindungen der Organosiliciumkomponente (A) sind bereits bekannt und können nach beliebigen und bisher bekannten Methoden hergestellt werden. Diese Verfahren umfassen eine Auswahl und geeignete Kombination der Reaktionen Hydrolyse, Alkoholyse, Kondensation und Äquilibrierung, wie z.B. Alkoholyse von Chlorsilanen gegebenenfalls mit anschließender Hydrolyse und anschließender Kondensation oder durch Hydrolyse und Kondensation von Mischungen der entsprechenden Chlorsilane, Alkoxysilane oder teilalkoxylierten Chlorsilane. Bevorzugt werden die gewünschten Siliconbausteine in Form der Chlorsilane als Edukte für die Synthese als Ausgangsmaterialien eingesetzt. Bevorzugt wird bei der Alkoholyse Methanol oder Ethanol eingesetzt.

Die erfindungsgemäß eingesetzten Verbindungen der Organosiliciumkomponente (A) sind bevorzugt herstellbar durch Alkoholyse, Hydrolyse und Kondensation von Trichlor- und/oder Tetrachlorsilanen, gegebenenfalls im Gemisch mit Dichlorsilan und/oder Chlorsilan, wobei bei der Alkoholyse der entsprechende Alkohol im stöchiometrischen Überschuss und bei der Hydrolyse Wasser im stöchiometrischen Unterschuss, jeweils bezogen auf ursprünglich vorhandene Si-Cl-Bindungen, eingesetzt wird; oder durch Hydrolyse von Trialkoxy- und/oder Tetraalkoxysiloxanen, gegebenenfalls im Gemisch mit Dialkoxysiloxanen und/oder Alkoxysiloxanen, wobei bei der Hydrolyse Wasser im stöchiometrischen Überschuss, bezogen auf ursprünglich vorhandene Si-Alkoxy-Bindungen, eingesetzt wird. Die Umsetzungen können sowohl ohne, als auch in Gegenwart eines gegenüber den eingesetzten Komponenten unreaktiven Lösungsmittels, wie beispielsweise Toluol, Lösungsmittel mit dem Handelsnamen "ISOPAR E" oder 2-Methoxypropylacetat, durchgeführt werden.

Beispiele für Trichlorsilane, die bei der Herstellung der erfindungsgemäß eingesetzten Verbindungen der Organosiliciumkomponente (A) verwendet werden können, sind Methyl-, Ethyl-, n-Propyl-, Vinyl-, n-Octyl-, 2,4,4-Trimethylpentyl-, cyclo-Hexyl- und Phenyl-trichlorsilan, 1,2-Bis(trichlorsilyl)ethan, cis,trans-1,2-Bis(trichlorsilyl)ethen, 1,2-Bis(Dichlormethyl-silyl)ethan, cis,trans-1,2-Bis(Dichlormethylsilyl)ethen oder deren Gemische.

Beispiele für Dichlorsilane, die bei der Herstellung der erfindungsgemäß eingesetzten Verbindungen der Organosiliciumkomponente (A) verwendet werden können, sind Dimethyl-, Diethyl-, Ethylmethyl-, Methylphenyl-, Divinyl-, Methylvinyl-, Ethylvinyl-, Phenylvinyl-, Di-(n-Octyl)-, Methyl-(n-Octyl)-, Ethyl-(n-Octyl)-, Phenyl-(n-Octyl)-, Vinyl-(n-Octyl)-, Bis(2,4,4-Trimethylpentyl)-, Methyl-(2,4,4-Trimethylpentyl)-, Ethyl-(2,4,4-Trimethylpentyl)-, Phenyl-(2,4,4-Trimethylpentyl)-, Vinyl-(2,4,4-Trimethylpentyl)-, Di-(cyclo-Hexyl)-, Methyl-(cyclo-Hexyl)-, Ethyl-(cyclo-Hexyl)-, Phenyl-(cyclo-Hexyl)-, Vinyl-(cyclo-Hexyl)- und Diphenyl-dichlorsilan oder deren Gemische.

Beispiele für Monochlorsilane, die bei der Herstellung der erfindungsgemäß eingesetzten Verbindungen der Organosiliciumkomponente (A) verwendet werden können, sind Trimethyl-, Triethyl-, Triphenyl-, Dimethylphenyl-, Methyldiphenyl-, Dimethylvinyl-, Methyldivinyl-, Dimethyl-(cyclo-Hexyl)- und Dimethyl-(2,4,4-Trimethylpentyl)-chlorsilan oder deren Gemische.

Verbindungen der Organosiliciumkomponente (A) sind besonders bevorzugt herstellbar durch Reaktionen ausgewählt aus Alkoholyse, Hydrolyse und Kondensation von
a) Methyl-, Ethyl-, Vinyl-, 2,4,4-Trimethylpentyl- oder Phenyl-trichlorsilan und gegebenenfalls Dimethyl-, Diethyl-, Diphenyl-, Methylethyl-, Methylphenyl- oder Ethylphenyldichlorsilan, oder
b) Tetrachlorsilan und gegebenenfalls Trimethylchlorsilan, oder durch Hydrolyse von
c)Methyl-, Ethyl-, Vinyl-, 2,4,4-Trimethylpentyl- oder Phenyltrimethoxysiloxan und gegebenenfalls Dimethyl-, Diethyl-, Diphenyl-, Methylethyl-, Methylphenyl- oder Ethylphenyldimethoxysilan, oder
d) Tetramethoxysilan und gegebenenfalls Trimethylmethoxysilan, oder durch Hydrolyse von
e)Methyl-, Ethyl-, Vinyl-, 2,4,4-Trimethylpentyl- oder Phenyltriethoxysiloxan und gegebenenfalls Dimethyl-, Diethyl-, Diphenyl-, Methylethyl-, Methylphenyl- oder Ethylphenyldiethoxysilan, oder
f) Tetraethoxysilan und gegebenenfalls Trimethylethoxysilan.

Bei den erfindungsgemäß eingesetzten Metallverbindungen (B) handelt es sich bevorzugt um Aluminium(III)-, Bismuth(III)-, Eisen(II)-, Eisen(III)-, Mangan(II)-, Mangan(III)-, Titan(III)-, Titan(IV)-, Vanadium(III)-, Vanadium(IV)-, Vanadium(V)-, Zink(II)-, Zinn(II)-, Zinn(IV)-, Zirkonium(IV)-, Tantal(V)- oder Niob(V)-Verbindungen.

Die erfindungsgemäß eingesetzten Metallverbindungen (B) enthalten mindestens ein organisch gebundenes Kohlenstoffatom.

Bei den erfindungsgemäß eingesetzten Metallverbindungen (B) kann es sich um Metallsalzverbindungen (B-1) handeln, zusammengesetzt aus einem Metallkation (B-11) und einem anionischen organischen Rest (B-12).

Beispiele für Metallkationen (B-11) sind Aluminium(III)-, Bis-muth(III)-, Eisen(II)-, Eisen(III)-, Mangan(II)-, Mangan(III)-, Titan(III)-, Titan(IV)-, Vanadium(III)-, Vanadium(IV)-, Vanadium(V)-, Zink(II)-, Zinn(II)-, Zinn(IV)-, Zirkonium(IV)-, Tantal(V)- und Niob(V)-Kationen.

Bevorzugt handelt es sich bei Metallkation (B-11) um Aluminium(III)-, Bismuth(III)-, Eisen(II)-, Eisen(III)-, Mangan(II)-, Mangan(III)-, Titan(IV)-, Zink(II)- oder Zirkonium(IV)-Kationen, besonders bevorzugt um Aluminium(III)-, Bismuth(III)-, Zink(II)-, Titan(IV)- oder Zirkonium(IV)-Kationen, insbesondere um Zink(II)-, Bismuth(III)-Kationen, oder Aluminium(III).

Beispiele für anionische organische Reste (B-12) sind Alkoxid-Reste, wie der Methoxid-, Ethoxid-, n-Propoxid-, Isopropoxid-, n-Butoxid-, iso-Butoxid-, sec-Butoxid-, tert.-Butoxid-, Triethanolaminat- und 2-Ethylhexyloxidrest; Carboxylat-Reste, wie der Acetat-, Formiat-, n-Octoat-, 2-Ethylhexanoat-, 2,4,4-Trimethylpentanoat-, 2,2,4-Trimethylpentanoat-, 6-Methylheptanoat-, Oleat-, Ricinolat-, Palmitat-, Hexoat-, Hexadecanat-, 2-Ethylhexanoat-, Benzoat-, 1,4-Dibenzoat, Stearat-, Acrylat-, Laurat-, Methacrylat-, 2-Carboxyethylacrylat-, Oxalat-, 10-Undecylenat-, Dodecanoat-, Citrat-, 3-Oxopentanoat-, 3-Oxobutanoat- und Neodecanoatrest; Amidreste, wie der Dimethylamid-, Diethylamid-, Ethylmethylamid- und Dipropylamidrest; Lactatrest; Trialkylsiloxyreste, insbesondere Trimethylsiloxy- und Triethylsiloxyrest, sowie Carbonatreste (O⁻-CO-OR') und Carbamatreste (O⁻-CO-NR'₂), wobei R' gleich oder verschieden sein kann und einen einwertigen oder zweiwertigen, gegebenenfalls substituierten Kohlenwasserstoffrest bedeutet und darüber hinaus die Bedeutung von Wasserstoffatom, Trimethoxysilylpropyl-, Triethoxysilylpropyl-, Dimethoxymethylsilylpropyl-, Diethoxymethylsilylpropyl-, N-[3-(Trimethoxysilyl)propyl]-2-aminoethyl-, N-[3-(Triethoxysilyl)propyl]-2-aminoethyl-, N-[3-(Dimethoxymethylsilyl)propyl]-2-aminoethyl- oder N-[3-(Diethoxymethylsilyl)propyl]-2-aminoethylrest haben kann.

Beispiele für erfindungsgemäß eingesetzte Metallsalzverbindungen (B-1) sind Aluminium(III)-ethoxid, Aluminium(III)-(n-propoxid), Aluminium(III)-(isopropoxid), Aluminium(III)-(n-butoxid), Aluminium(III)-(iso-butoxid), Aluminium(III)-(tert.-butoxid), Aluminium(III)-(sec-butoxid), Aluminium(III)-(2-ethylhexanoat), Aluminium(III)-neodecanoat, Aluminium(III)-stearat, Aluminium(III)-(n-octoat), Aluminium(III)-(2-ethylhexanoat), Bismut(III)-(2-ethylhexanoat), Bismut(III)-neodecanoat, Bismut(III)-acetat, Mangan(II)-octoat, Mangan(II)-acetat, Mangan-(II)-(2-ethylhexanoat), Titan(IV)-ethoxid, Titan(IV)-(n-propoxid), Titan(IV)-(isopropoxid), Titan(IV)-(n-butoxid), Titan-(IV)-(tert.-butoxid), Titan(IV)-(sec-butoxid), Titan(IV)-(2-ethylhexyloxid), Titan(IV)-(triethanolaminat)-isopropoxid, Titan(IV)-tetrakis(diethylamid), Titan(IV)-tetrakis(dimethylamid), Vanadium(V)-oxy-tri(ethoxid), Vanadium(V)-oxy-tri(isopropoxid), Vanadium(V)-oxy-tri(n-propoxid), Eisen(II)-acetat, Eisen(III)-(tert.-butoxid), Eisen(III)-citrat, Eisen(II)-lactat, Eisen(II)-oxalat, Eisen(III)-oxalat, Eisen(III)-(2-ethylhexanoat), Zink(II)-acetat, Zink(II)-formiat, Zink(II)-benzoat, Zink(II)-(2-ethylhexanoat), Zink(II)-n-octoat, Zink(II)-stearat, Zink(II)-ethoxid, Zink(II)-acrylat, Zink(II)-methacrylat, Zink(II)-oxalat, Zink(II)-(10-undecylenat), Zink(II)-(3-oxopentanoat), Zink(II)-(3-oxobutanoat), Zirconium(IV)-acetat, Zirconium(IV)-(2-ethylhexanoat), Zirconium(IV)-lactat, Zirconium(IV)-(n-butoxid), Zirconium(IV)-(tert.-butoxid), Zirconium(IV)-(isopropoxid), Zirconium(IV)-(n-propoxid), Zirconium-(IV)-(2-carboxyethylacrylat), Zirconium(IV)-tetrakis(diethylamid), Zirconium(IV)-tetrakis(ethylmethylamid), Zirconium(IV)-bis(diethylcitrato)-di-n-propoxid, Dioctylzinn(IV)-laurat, Di-n-butylzinn(IV)-laurat, Dimethylzinn(IV)-laurat, Di-n-octyl-zinn(IV)-acetat, Di-n-butylzinn(IV)-acetat, Verbindung erhältlich durch Umsetzung von Di-n-octylzinn-(IV)-acetat mit Tetraethoxysilan, Verbindung erhältlich durch Umsetzung von Di-n-butylzinn-(IV)-acetat mit Tetraethoxysilan, Zinn(II)-(n-octoat), Zinn(II)-acetat, Zinn(IV)acetat, Zinn(IV)-tert.-butoxid und Zinn(II)-oxalat, Tantal(V)-ethoxid, Niob(V)-ethoxid, Niob(V)-isopropoxid, Verbindungen der Formeln [Ta(OSiEt₃)₅], [Ta(OEt)₄(OSiMe₃)], [Nb(OEt)₂(OSiMe₃)₃] und [Nb(OEt)₄(OSiMe₃)], wobei Me Methylrest und Et Ethylrest bedeutet.

Bevorzugt handelt es sich bei den erfindungsgemäß eingesetzten Metallsalzverbindungen (B-1) um Aluminium(III)-ethoxid, Aluminium(III)-(n-propoxid), Aluminium(III)-(isopropoxid), Aluminium(III)-(n-butoxid), Aluminium(III)-(iso-butoxid), Aluminium-(III)-(tert.-butoxid), Aluminium(III)-(sec-butoxid), Aluminium(III)-(2-ethylhexanoat), Aluminium(III)-neodecanoat, Aluminium(III)-stearat, Aluminium(III)-(n-octoat), Aluminium(III)-(2-ethylhexanoat), Bismut(III)-(2-ethylhexanoat), Bismut(III)-neodecanoat, Bismut(III)-acetat, Mangan(II)-octoat, Mangan-(II)-acetat, Mangan(II)-(2-ethylhexanoat), Titan(IV)-ethoxid, Titan(IV)-(n-propoxid), Titan(IV)-(isopropoxid), Titan(IV)-(n-butoxid), Titan(IV)-(tert.-butoxid), Titan(IV)-(sec-butoxid), Titan(IV)-(2-ethylhexyloxid), Titan(IV)-(triethanolaminat)-isopropoxid, Titan(IV)-tetrakis(diethylamid), Titan(IV)-tetrakis(dimethylamid), Zink(II)-acetat, Zink(II)-formiat, Zink-(II)-benzoat, Zink(II)-(2-ethylhexanoat), Zink(II)-octoat, Zink(II)-stearat, Zink(II)-ethoxid, Zink(II)-methoxid, Zink-(II)-acrylat, Zink(II)-methacrylat, Zink(II)-oxalat, Zink(II)-(10-undecylenat), Zink(II)-(3-oxopentanoat), Zink(II)-(3-oxo-butanoat), Zirconium(IV)-acetat, Zirconium(IV)-(2-ethylhexanoat), Zirconium(IV)-lactat, Zirconium(IV)-(n-butoxid), Zirconium(IV)-(tert.-butoxid), Zirconium(IV)-(isopropoxid), Zirconium(IV)-(n-propoxid), Zirconium(IV)-(2-carboxyethylacrylat), Zirconium(IV)-tetrakis(diethylamid), Zirconium(IV)-tetrakis-(ethylmethylamid) und Zirconium(IV)-bis(diethylcitrat)-di-n-propöxid.

Besonders bevorzugt handelt es sich bei den erfindungsgemäß eingesetzten Metallsalzverbindungen (B-1) um Aluminium(III)-neodecanoat, Aluminium(III)-(n-octoat), Aluminium(III)-(2-ethylhexanoat), Bismut(III)-(2-ethylhexanoat), Bismut(III)-neodecanoat, Zink(II)-(2-ethylhexanoat), Zink(II)-(3-oxopentanoat) und Zirconium(IV)-(2-ethylhexanoat).

Erfindungsgemäß eingesetzte Komponenten (B-1) sind handelsübliche Produkte bzw. nach in der Chemie gängigen Verfahren herstellbar.

Bei der erfindungsgemäß eingesetzten Komponente (B) kann es sich darüber hinaus um Metall-Chelat-Verbindungen (B-2) der Formel (II) handeln 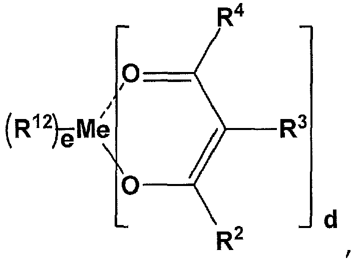 worin
Me Metall ausgewählt aus denen der 3., 4. und 5. Hauptgruppe sowie der 2., 4., 5., 7. und 8. Nebengruppe in der Oxidationsstufe +2 bis +5, bevorzugt Aluminium(III), Bismuth(III), Eisen(II), Eisen(III), Mangan(II), Mangan(III), Niob(V), Tantal(V), Titan(III), Titan(IV), Vanadium(III), Vanadium(IV), Vanadium(V), Zink(II), Zinn(II), Zinn(IV) oder Zirkonium(IV), bedeutet,
R², R³, und R⁴ jeweils unabhängig voneinander Wasserstoffatom, gegebenenfalls substituierten Kohlenwasserstoffrest oder Organyloxyrest bedeuten,
R¹² gleich oder verschieden sein kann und Organyloxidrest oder Oxid-Rest bedeutet,
d 1, 2, 3 oder 4 ist und
e 0, 1, 2, 3 oder 4 ist,
mit der Maßgabe, dass die Summe d+e 2 bis 6 ist.

Beispiele für Kohlenwasserstoffreste R², R³ und R⁴ sind jeweils unabhängig voneinander Wasserstoffatom, die für Rest R und Rest -OR¹ angegebenen Beispiele sowie zweiwertige, gegebenenfalls substituierte Kohlenwasserstoffreste. Falls es sich bei R², R³ und R⁴ um substituierte Kohlenwasserstoffreste handelt, sind als Substituenten jeweils unabhängig voneinander Halogenatome, Aminogruppen, Ethergruppen, Estergruppen, Epoxygruppen, Mercaptogruppen oder Cyanogruppen bevorzugt.

Bevorzugt handelt es sich bei den Resten R² und R⁴ unabhängig voneinander um Wasserstoffatom oder gegebenenfalls substituierte Kohlenwasserstoffreste mit 1 bis 18 Kohlenstoffatomen, besonders bevorzugt um Methyl-, Ethyl-, Phenyl-, Trifluoromethylreste, tert.-Butyl-, Benzyl- oder Isopropylrest, insbesondere um Methyl-, Ethyl-, tert.-Butyl-, oder Isopropylrest, oder um Alkoxyreste wie Methoxy-, Ethoxy-, n-Propoxy-, Isopropoxy-, n-Butoxy- und Phenoxyrest.

Bevorzugt handelt es sich bei Rest R³ um Wasserstoffatom oder gegebenenfalls substituierte Kohlenwasserstoffreste mit 1 bis 18 Kohlenstoffatomen, besonders bevorzugt um Wasserstoffatom, Methyl- oder Ethylrest, insbesondere um Wasserstoffatom.

Obwohl in Formel (II) nicht ausgedrückt, können zwei der Reste R², R³ und R⁴ die Bedeutung von zweiwertigen, gegebenenfalls substituierten Kohlenwasserstoffresten haben und zusammen einen Ring bilden. Beispielsweise können R⁴ und R² zusammen einen Ring bilden, wie im 1,3-Cycloheptandion oder 1,3-Cyclohexandion. Auch können R³ und R² zusammen einen Ring bilden, wie in den Salicylsaeureestern, wie Salicylsäure-benzylester, Salicylsäure-phenylester, Salicylsäure-ethylester, Salicylsäure-(2-ethylhexyl)-ester, 2-Hydroxybenzaldehyd oder wie in 2-Acetyl-cyclopentanon, 2-Acetyl-cyclohexanon oder 2-Acetyl-1,3-cyclohexandion.

Beispiele für die Reste R¹² sind alle unter B-12 aufgeführten Alkoxid- und Amidreste sowie der Oxid-Rest O²⁻.

Beispiele für Metall-Chelat-Verbindungen (B-2) sind Aluminium-(III)-acetylacetonat, Aluminium(III)-(2,2,6,6-tetramethyl-3,5-heptandionat), Aluminium(III)-acetylacetonat-bis(ethylaceto-acetat), Aluminium(III)-(9-octadecenylacetoacetate)-diisopropoxid, Aluminium(III)-di(methoxid)ethylacetoacetat, Aluminium-(III)-di(s-butoxid)-ethylacetoacetat, Aluminium(III)-(s-butoxid)-bis(ethylacetoacetat), Aluminium(III)-methoxid-di(ethyl-acetoacetat), Aluminium(III)-di(isopropoxid)-acetylacetonat, Aluminium(III)-isopropoxid-di(acetylacetonat), Aluminium(III)-di(isopropoxid)-ethylacetoacetat, Aluminium(III)-isopropoxid-di(ethylacetoacetat), Aluminium(III)-bis(trimethylsiloxid)-e-thylacetoacetat, Aluminium(III)-bis(dimethoxymethylsiloxid)-ethylacetoacetat, Aluminium(III)-bis(dimethoxymethylsiloxid)-acetylacetonat, Aluminium(III)-bis(dimethylamid)-ethylaceto-acetat, Aluminium(III)-1,3-propandioxid-ethylacetoacetat, Aluminium(III)-di(isopropoxid)-(methylsalicylat), Bismut(III)-(2,2,6,6-tetramethyl-3,5-heptandionat), Bismuth(III)-acetylacetonat, Eisen(II)-acetylacetonat, Eisen(III)-acetylacetonat, Eisen(III)-(2,2,6,6-tetramethyl-3,5-heptandionat), Eisen(II)-(2,2,6,6-tetramethyl-3,5-heptandionat), Mangan(II)-acetylacetonat, Mangan(III)-(2,2,6,6-tetramethyl-3,5-heptandionat), Titan(IV)-bis(ethylacetoacetat)-di(iso-butoxid), Titan(IV)-bis(-acetylacetonat)-di(isopropoxid), Titan(IV)-oxid-bis(acetylacetonat), Titan(IV)-(2,2,6,6-tetramethyl-3,5-heptandionat), Vanadium(III)-acetylacetonat, Vanadium(IV)-oxo-bis(acetylacetonat), Zink(II)-(hexafluoroacetylacetonat), Zink(II)-(1,3-diphenyl-1,3-propandionat), Zink(II)-(1-phenyl-5-methyl-1,3-hexandionat), Zink(II)-(1,3-cyclohexandionat), Zink(II)-(2-acetyl-cyclohexanonat), Zink(II)-(2-acetyl-1,3-cyclohexandionat), Zink(II)-(ethyl-Salicylat), Zink(II)-(diethyl-malonat), Zink(II)-(ethyl-acetoacetat), Zink(II)-(benzyl-salicylat), Zink(II)-acetylacetonat und Zink(II)-(2,2,6,6-tetramethyl-3,5-heptandionat), Zinn(II)-acetylacetonat, Zirconium(IV)-acetylacetonat, Zirconium(IV)-(2,2,6,6-tetramethyl-3,5-heptandionat), Zirconium(IV)-trifluoroacetylacetonat und Zirconium(IV)-hexafluoroacetylacetonat, Tantal(V)acetylacetonat-tetraiso-propoxid und Tetraethoxytantal(V) acetylacetonat.

Weitere Beispiele für Chelatliganden, welche in Komponente (B-2) enthalten sein können, finden sich in EP-A 2 388 297, Seite 16, Zeilen 14 bis 43, die zum Offenbarungsgehalt dieser Anmeldung zu zählen sind.

Bevorzugt handelt es sich bei den erfindungsgemäß eingesetzten Metall-Chelat-Verbindungen (B-2) um Aluminium(III)-acetylacetonat, Aluminium(III)-(9-octadecenylacetoacetate)-di(isopropoxid), Bismut(III)-(2,2,6,6-tetramethyl-3,5-heptandionat), Bismuth(III)-acetylacetonat, Titan(IV)-bis(ethylacetoacetat)-di(iso-butoxid), Titan(IV)-bis(acetylacetonat)-(di-isopropoxid), Titan(IV)-oxid-bis(acetylacetonat), Titan(III)-(2,2,6,6-tetramethyl-3,5-heptandionat), Zink(II)-(hexafluoro-acetylacetonat), Zink(II)-(1,3-diphenyl-1,3-propandionat), Zink(II)-(1-phenyl-5-methyl-1,3-hexandionat), Zink(II)-(1,3-cyclohexandionat), Zink(II)-(2-acetyl-cyclohexanonat), Zink-(II)-(2-acetyl-1,3-cyclohexandionat), Zink(II)-(ethyl-salicylat), Zink(II)-(diethyl-malonat), Zink(II)-(ethylacetoacetat), Zink(II)-(benzyl-salicylat), Zink(II)-acetylacetonat oder Zink(II)-(2,2,6,6-tetramethyl-3,5-heptandionat) .

Komponente (B-2) sind handelsübliche Produkte bzw. nach in der Chemie gängigen Verfahren herstellbar.

Bei den erfindungsgemäß eingesetzten Stickstoffverbindungen (C) handelt es sich bevorzugt um Guanidine und/oder Amidine der Formel (III) 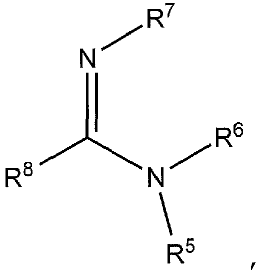 worin
R⁵, R⁶ und R⁷ jeweils unabhängig voneinander Wasserstoffatom, gegebenenfalls substituierte aliphatische Kohlenwasserstoffreste mit 1 bis 18 Kohlenstoffatomen, gegebenenfalls substituierte aromatische Kohlenwasserstoffreste mit 6 bis 10 Kohlenstoffatomen, gegebenenfalls substituierte arylaliphatische Kohlenwasserstoffreste mit 7 bis 20 Kohlenstoffatomen oder gegebenenfalls substituierte cycloaliphatischen Kohlenwasserstoffreste mit 5 bis 18 Kohlenstoffatomen bedeutet, mit der Maßgabe, dass höchstens zwei der Reste R⁵, R⁶ oder R⁷ die Bedeutung von einem Wasserstoffatom haben und in den Kohlenwasserstoffresten ein Kohlenstoffatom durch ein Heteroatom ersetzt sein kann, und
R⁸ eine für Rest R⁵ angegebene Bedeutung hat oder einen Rest -NR⁵R⁶ oder -NR⁵R⁹ darstellt, worin R⁹ 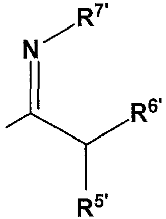 entspricht, wobei
R⁵', R⁶' und R⁷' gleich oder verschieden sein können und eine für R⁵, R⁶ und R⁷ oben angegebene Bedeutung haben.

Falls es sich bei R⁵, R⁶, R⁷, R^{5'}, R^{6'} und R^{7'} um substituierte Kohlenwasserstoffreste handelt, sind als Substituenten jeweils unabhängig voneinander Hydroxygruppen, Halogenatome, Aminogruppen, Ethergruppen, Estergruppen, Epoxygruppen, Mercaptogruppen, Cyanogruppen oder Organosilylreste bevorzugt.

In einer bevorzugten Ausführungsform handelt es sich bei den Resten R⁵, R⁶, R⁷, R^{5'}, R^{6'}, R^{7'} und R⁸ jeweils um einwertige Reste.

In einer weiteren bevorzugten Ausführungsform können - obwohl in Formel (III) nicht ausgedrückt - zwei oder mehr der Reste R⁵, R⁶, R⁷ und R⁸ auch einen di- oder mehrfunktionellen, gegebenenfalls substituierten Kohlenwasserstoffrest mit 2 bis 8 Kohlenstoffatomen darstellen, der mit Heteroatomen unterbrochen sein kann.

Bevorzugt bilden sowohl R⁵ und R⁸, als auch R⁶ und R⁷ jeweils einen difunktionellen Rest. In einer weiteren bevorzugten Ausführungsform bilden R⁶ und R⁷ einen difunktionellen Rest, während R⁵ und R⁸ jeweils separat monofunktionelle Reste bleiben.

Falls R⁵ und R⁸ zusammen einen difunktionellen Rest bilden, dann sind -(CH₂)₃-, -(CH₂)₄- und -(CH₂)₅- bevorzugt.

Falls R⁶ und R⁷ zusammen einen Ring bilden, dann ist -(CH₂)-, -(CH₂)₂- und -(CH₂)₃- bevorzugt.

Insbesondere bilden R⁶ und R⁷ zusammen -(CH₂)₃- und gleichzeitig R⁵ und R⁸ zusammen -(CH₂)₃-, -(CH₂)₄- oder -(CH₂)₅-.

Handelt es sich bei den di- oder mehrfunktionellen Kohlenwasserstoffresten um einen mit Heteroatom substituierten Kohlenwasserstoffrest, so ist das Heteroatom bevorzugt Sauerstoff, Stickstoff oder Schwefel, besonders bevorzugt Stickstoff oder Sauerstoff.

Bevorzugt bilden die Reste R⁵ und R⁸ zusammen einen difunktionellen Rest, in dem ein Kohlenstoffatom durch ein Heteroatom substituiert ist. Falls R⁵ und R⁸ zusammen einen difunktionellen Rest bilden, in dem ein Kohlenstoffatom durch ein Heteroatom ersetzt ist, dann sind -NH(CH₂)₂-, -NH(CH₂)₃-, -N(CH₃)(CH₂)₃- oder -NH(CH₂)₄- bevorzugt, wobei die Orientierung bevorzugt ist, bei der keine N-N-Bindung entsteht.

Besonders bevorzugt bilden die Reste R⁵ und R⁸ einen difunktionellen Rest, in dem ein Kohlenstoffatom durch ein Heteroatom ersetzt ist, wie -NH(CH₂)₂-, -NH(CH₂)₃-, -N(CH₃)(CH₂)₃- oder -NH(CH₂)₄-, sowie gleichzeitig R⁶ und R⁷ zusammen einen difunktionellen Rest -(CH₂)₂- oder -(CH₂)₃-. Insbesondere bilden R⁵ und R⁸ -NH(CH₂)₃- oder -N(CH₃)(CH₂)₃-, wobei der NH oder N(CH₃) als R⁸ an Kohlenstoffatom entsprechend Formel (III) gebunden ist und R⁶ und R⁷ -(CH₂)₃- ist.

In einer weiteren Ausführungsform bilden R⁶, R⁸ und R⁷ zusammen einen trifunktionellen Rest -(CH₂)₃-C(-)H-(CH₂)₃-, wobei die offene Bindung des mittleren CH dem Rest R⁸ entspricht.

Der Kohlenwasserstoffrest kann auch mehrere Heteroatome enthalten. R⁵ und R⁶ können zusammen einen Ring bilden, wie im Azolidin, Azetidin, 1,3-Diazetidin, 1,3-Diazolidin, Azinan, 1,3-Diazinan, 1,4-Diazinan, 1,4-Oxazinan, 1,3-Oxazinan, Azepan, Azocan, Azonan, Azecan, 2,3,4,5-Tetrahydropyridin, 1,2,3,4-Tetrahydropyridin, 1,2,3,6- Tetrahydropyridin, 1-Pyrrolin 2-Pyrrolin, 3-Pyrrolin oder Diazepin.

Falls es sich bei den Resten R⁵, R⁶, R⁷, R^{5'}, R^{6'} und R^{7'} um einwertige Reste handelt, dann handelt es sich bevorzugt, jeweils unabhängig voneinander um Wasserstoffatom, gegebenenfalls substituierte aliphatische Kohlenwasserstoffreste mit 1 bis 6 Kohlenstoffatomen, gegebenenfalls substituierte Phenylreste, gegebenenfalls substituierte Benzylreste, gegebenenfalls substituierte Cyclopentyl- oder Cyclohexylreste, besonders bevorzugt um Wasserstoffatom, Methyl-, tert.-Butyl- und Phenylrest.

Insbesondere handelt es sich bei den Resten R^{5'}, R^{6'} und R^{7'} um Wasserstoffatom.

Beispiele für die erfindungsgemäß eingesetzte Komponente (C) sind (1-Aminoethyl)-2-octyl-2-imidazolin, 1-(1-Naphthyl)guanidin, 1-(2,3-Xylyl)biguanid, 1-(2,3-Xylyl)guanidin, 1-(2,6-Xylyl)biguanid, 1-(2,6-Xylyl)guanidin, 1-(2-Chlorophenyl)biguanid, 1-(2-Chlorophenyl)guanidin, 1-(2-Ethylhexyl)biguanid, 1-(2-Phenylethyl)biguanid, 1-(3,4-Dichlorophenyl)-5-(1-methylethyl)biguanid, 1-(3-Methylphenyl)biguanid, 1-(3-Methylphenyl)-guanidin, 1-(4-Chlorobenzyloxy)biguanid, 1-(4-Chlorophenyl)-3-(1-methylethyl)guanidin, 1-(4-Chlorophenyl)-5-(1-methylethyl)-biguanid, 1-(4-Chlorophenyl)biguanid, 1-(4-Chlorophenyl)guanidin, 1-(4-Methoxyphenyl)biguanid, 1-(4-Methoxyphenyl)guanidin, 1-(4-Methylphenyl)-3-octylguanidin, 1-(4-Methylphenyl)-5-octylbiguanid, 1-(4-Methylphenyl)biguanid, 1-(4-Methylphenyl)-guanidin, 1,2-Bis[2-(1-methylethyl)phenyl]guanidin, 1-(4-Nitrophenyl)biguanid, 1-(4-Nitrophenyl)guanidin, 1-(Benzyloxy)-guanidin, 1-(Hydroxymethyl)biguanid, 1-(2-Hydroxyethyl)biguanid, 1-(1-Naphthyl)biguanid, 1-(7-Hydroxy-1-naphthyl)biguanid, 1-(Morpholinosulfonyl)benzylbiguanid, 1-(o-Tolyl)biguanid, 1-(o-Tolyl)guanidin, 1,1,2,3,3-Pentamethylguanidin, 1,1,2-Trimethylguanidin, 1,1,3,3-Tetramethyl-2-[3-(trimethoxysilyl)propyl]guanidin, 2-[3-(Dimethoxy(methyl)silyl)propyl]-1,1,3,3-tetramethylguanidin, 2-[3-(Methoxydimethylsilyl)propyl]-1,1,3,3-tetramethylguanidin, 2-[3-(1,1-Diethoxy-3,3,3-trimethyldisiloxanyl)propyl]-1,1,3,3-tetramethylguanidin, 1,1,3,3-Tetramethyl-2-[3-(tris(prop-1-en-2-yloxy)silyl)propyl]guanidin, 1,1,3,3-Tetramethyl-2-[3-(2,5,8-trimethyl-4,6-dioxa-3,7-diaza-5-silanona-2,7-dien-5-yl)propyl]guanidin, 1,3-Dimethyl-1,3-diphenyl-2-[2-(3-(tris(ethyl(methyl)amino)silyl)propoxy)-ethyl]guanidin, 1,3-dicyclohexyl-2-[3-(triethoxysilyl)propyl]-guanidin, 1,1,3,3-Tetramethylguanidin (TMG), 1,1,3,3-Tetraphenylguanidin, 1,1'-[4-(Dodecyloxy)-m-phenylen]bisguanidin, 1,1'-[Methylenebis(p-phenylen)]bisguanidin, 1,1-Diethylbiguanid, 1,1-Dimethylbiguanid, 1,1'-Ethylenebisbiguanid, 1,1'-Hexamethylenebis[5-(4-chlorophenyl)biguanid], 1,2,3-Trimethylguanidin, 1,2-Diethyl-1,4,5,6-tetrahydropyrimidin, 1,2-Diisopropyl-3-[bis(dimethylamino)methylen]guanidin, 1,2-Dimethyl-1,4,5,6-tetrahydropyrimidin, 1,3-Dibenzylguanidin, 1-Di-(o-tolyl)guanidin, 1,3-Diphenylbiguanid, 1,3-Dimethylguanidin, 1,3-Diphenylguanidin, 1,3-Diphenyl-1,3-dimethylguanidin, 1,4-Diazabicyclo[2.2.2]octan, 1,2-Diphenyl-4,5-dihydro-1H-imidazol, 1,4,5,6-Tetrahydropyrimidin (THP), 1,5,7-Triazabicyclo-[4.4.0]dec-5-en (TBD), 1,5-Diazabicyclo[4.4.0]dec-5-en (DBD), 1,5-Diaza-10-methylbicyclo[4.4.0]dec-5-en, 1,5-Diazabicyclo-[4.3.0]non-5-en (DBN), 1,5-Diaza-3-methylbicyclo[4.3.0]non-5-en, 1,5-Diazabicyclo[4.2.0]oct-5-en, 1,5-Diazabicyclo[4.4.0]-dec-5-en, 1,5-Dibutyl-4,5-dihydro-1H-1,2,4-triazol, 1,5-Diphenylbiguanid, 1,5-Ethylenbiguanid, 1,8-Bis(tetramethylguanidino)naphthalen (TMGN), 1,8-Diazabicyclo[5.3.0]dec-7-en, 1,8-Diazabicyclo[5.4.0]undec-7-en (DBU), 1,9-Diazabicyclo[6.4.0]dodec-8-en, 1,10-Diazabicyclo[7.4.0]tridec-9-en, 1,14-Diazabicyclo[11.4.0]heptadec-13-en, 1-[3-(Dibutylamino)propyl]biguanid, 1-[3-(Diethylamino)propyl]biguanid, 1-Allylbiguanid, 1-Benzyl-2,3-dimethylguanidin, 1-Benzylaminoguanidin, 1-Benzylbiguanid, 1-Benzylguanidin, 1-Cyclohexylbiguanid, 1-Ethyl-2-isopropyl-1,4,5,6-tetrahydropyrimidin, 1-Ethyl-2-methyl-1,4,5,6-tetrahydropyrimidin, 1-Ethyl-2-n-propyl-1,4,5,6-tetrahydropyrimidin, 1-Isopropyl-2-methyl-1,4,5,6-tetrahydropyrimidin, 1-Methylbiguanid, 1-Methyl-4,5-dihydro-1H-1,2,4-triazol, 1-Morpholinobiguanid, 1-n-Butylbiguanid, 1-n-Butylguanidin, 1-n-Butyl-N2-ethylbiguanid, 1-n-Octadecylbiguanid, 1-n-Propyl-2-methyl-1,4,5,6-tetrahydropyrimidin, 1-Phenyl-1-methylbiguanid, 1-Phenylbiguanid, 1-Phenylguanidin, 1-Phenyl-1-methylguanidin, 2-[(5,6,7,8-Tetrahydronaphtalene-1-yl)amino]-2-imidazolin, 2-(Phenylimino)imidazolidin, 2,3-Dimethyl-3,4,5,6-tetrahydropyrimidin, 2,3-Dimethylimidazol, 2,3,5,6-Tetrahydro-3-phenyl-1H-imidazo[1,2-a]imidazole, 2,6-Diazabicyclo[3.2.1]octan, 2,6-Diazabicyclo[3.2.0]heptan, 2,6-Diazabicyclo[3.3.0]octan, 2,7-Diazabicyclo[4.2.0]octan, 2,7-Diazabicyclo[3.3.0]octan, 2,7-Diazabicyclo[4.3.0]octan, 2,8-Diazabicyclo[4.2.0]octan, 2,8-Diazabicyclo[4.3.0]nonan, 2-[(3,4-Dichlorophenoxy)methyl]-2-imidazolin, 2-Benzyl-2-imidazolin, 2-Benzylbiguanid, 2-Cyclohexyl-1,1,3,3-tetrapropylguanidine, 2-Cyclohexyl-2-imidazolin, 2-Ethyl-1,1,3,3-tetramethylguanidin, 2-Ethyl-2-imidazolin, 2-Ethyl-4-methylimidazol, 1-(1H-Benzimidazol-2-yl)guanidin, 2-Isopropyl-2-imidazolin, 2-Methyl-2-imidazolin, 2-Methyl-4,5-dihydro-1H-imidazol, 2-Methylimidazol, 2-n-Octyl-2-imidazolin, 2-n-Propyl-2-imidazolin, 2-n-Undecyl-2-imidazolin, 2-Phenyl-1,3-dicyclohexylguanidin, 2-Phenyl-1,1,3,3-Tetramethylguanidin, 2-Phenyl-2-imidazolin, 2-tert.-Butyl-1,1,3,3-tetramethylguanidin, 3,3,6,9,9-Pentamethyl-2,10-diazabicyclo[4.4.0]dec-1-en, 3-(2-Phenylethyl)biguanid, 3-Benzylbiguanid, 3-Morpholinobiguanid, 3,6-Diazabicyclo[3.2.0]heptan, 3,6-Diazabicyclo-[3.2.1]octan, 3,7-Diazabicyclo[4.2.0]octan, 3,7-Diazabicyclo-[4.3.0]nonan, 3,8-Diazabicyclo[4.3.0]nonan, 3,9-Diazabicyclo-[4.3.0]nonan, 4,4-Diethyl-2-imidazolin, 4,4-Dimethyl-2-imidazolin, 4,5-Dimethyl-2-imidazolin, 4-Ethyl-2-undecyl-2-imidazolin, 4-Guanidinobenzoesäure, 5-[3-(2,4,5-Trichlorophenoxy)-propoxy]-1-isopropylbiguanid, 6-Dibutylamino-1,8-diazabicyclo-[5.4.0]undec-7-en (DBA-DBU), 6-Hydroxyamino-1,8-diazabicyclo-[5.4.0]undec-7-en (DBU-OH), 7-Isopropyl-1,5,7-triazabicyclo-[4.4.0]dec-5-en, 7-Methyl-1,5,7-triazabicyclo[4.4.0]dec-5-en (Me-TBD), 7-n-Butyl-1,5,7-triazabicyclo[4.4.0]dec-5-en, 7-Cyclohexyl-1,5,7-triazabicyclo[4.4.0]dec-5-en, 7-n-Propyl-1,5,7-triazabicyclo[4.4.0]dec-5-en, 7-Phenyl-1,5,7-triazabicyclo-[4.4.0]dec-5-en, Biguanid, Dicyandiamid, Guanidin, Guanylthioharnstoff, Imidazol, N-(2-Imidazolin-2-yl)-1-naphthalenamin, N-(2-Imidazolin-2-yl)-2,3-xylidin, N-Benzyl-2-butyl-1,4,5,6-Tetrahydropyrimidin, N-Butylimidazol, N-Cyclohexyl-2-methyl-1,4,5,6-Tetrahydropyrimidin, N-Methyl-1,4,5,6-Tetrahydropyrimidin, N',N "-Dihexyl-3,12-diimino-2,4,11,13-tetraazatetradecandiamidin, N,N-Diamidinoanilin, N,N'-Dimethylformamidin, N,N-Dimethylformamidin, N,N'-Dimethylacetamidin, Trimethylacetamidin, N-Benzyl-N,N'-dimethylacetamidin, Benzamidin, 2-Methyl-benzamidin, 3,5-Difluor-benzamidin, 3-Chlor-benzamidin, N,N'-Dimethyl-N-ethylbenzamidin, N,N'-Dicyclohexyl-N-methylacetamidin, Triphenylbenzamidin, N,N'-Diphenyl-N'-methylbenzylamidin, (Z)- oder (E)-1-butyl-2,3-dicyclohexyl-1,3-dimethylguanidin, (Z)- oder (E)-N-butyl-N'-cyclohexyl-N-ethylpiperidine-1-carboximidamid, 2-(2-nonyl-4,5-dihydro-1H-imidazol-1-yl)ethanol, N-(2-(2-butyl-4,5-dihydro-1H-imidazol-1-yl)ethyl)-pentanamid, (Z)- oder (E)-2,3-Diisopropyl-1-methyl-1-[3-(trimethoxysilyl)propyl]guanidin, (Z)- oder (E)-1-Butyl-2,3-diisopropyl-1-(3-(trimethoxysilyl)propyl)guanidin, (Z)- oder (E)-1-[3-(Dimethoxy(methyl)silyl)propyl]-2,3-diisopropyl-1-methylguanidin, (Z)-oder (E)-2,3-Diisopropyl-1,1-bis(3-(trimethoxysilyl)propyl)guanidin, (Z)-oder (E)-2,3-Dicyclohexyl-1-methyl-1-(3-(trimethoxysilyl)propyl)guanidin, 2-(2-Hydroxy-2-(3-(trimethoxysilyl)propoxy)ethyl)-1,1,3,3-tetramethylguanidin, 2-(2-Hydroxy-1-(3-(trimethoxysilyl)propoxy)ethyl)-1,1,3,3-tetramethylguanidin, 2-(2,3,4,6,7,8,9,10-Octahydropyrimido[1,2-a]azepin-1-ium-1-yl)-1-(3-(trimethoxysilyl)propoxy)ethanolat, (Z)- oder (E)-1-(2-((E)-2,3-diisopropylguanidino)ethyl)-2,3-diisopropyl-1-(3-(triethoxysilyl)propyl)guanidin, sowie Umsetzungsprodukte erhältlich aus diesen Stickstoffverbindungen mit 3-Glycidoxypropyltrimethoxysilan oder 3-Glycidoxypropyltriethoxysilan.

Bevorzugt handelt es sich bei der erfindungsgemäß eingesetzten Komponente (C) um 1,5,7-Triazabicyclo[4.4.0]dec-5-en (TBD) und 7-Methyl-1,5,7-triazabicyclo[4.4.0]dec-5-en (Me-TBD), 1,4,5,6-Tetrahydropyrimidin (THP), 1,1,3,3-Tetramethylguanidin (TMG), 1,5-Diazabicyclo[4.4.0]dec-5-en (DBD), 1,5-Diazabicyclo-[4.3.0)non-5-en (DBN), 1,8-Diazabicyclo[5.4.0]undec-7-en (DBU) oder 1,8-Bis(tetramethylguanidino)naphthalen (TMGN).

Komponente (C) sind handelsübliche Produkte bzw. nach in der Chemie gängigen Verfahren herstellbar.

Zur Herstellung der erfindungsgemäßen Zusammensetzungen werden Stickstoffverbindungen (C) in Mengen von vorzugsweise 0,1 bis 10,0 Mol, besonders bevorzugt 0,5 bis 4,0 Mol, insbesondere 1,0 bis 3,0 Mol, jeweils bezogen auf 1,0 Mol Metallverbindung (B) eingesetzt.

Zur Herstellung der erfindungsgemäßen Zusammensetzungen werden Stickstoffverbindungen (C) in Mengen von vorzugsweise 0,01 bis 10 Gewichtsteilen, besonders bevorzugt 0,01 bis 5 Gewichtsteilen, insbesondere 0,05 bis 3 Gewichtsteilen, eingesetzt, jeweils bezogen auf 100 Gewichtsteile der Komponente (A).

In einer bevorzugten Ausführungsform der vorliegenden Erfindung wird mit den Komponenten (B) und (C) und gegebenenfalls einem Lösungsmittel (D) eine Katalysatorzubereitung (K) hergestellt, die dann mit Komponente (A) sowie gegebenenfalls weiteren Bestandteilen vermischt wird.

Die Herstellung der Katalysatorzubereitung (K) erfolgt bevorzugt durch Mischen von mindestens einer Metallverbindung (B), mindestens einer Stickstoffverbindung (C) gegebenenfalls in Gegenwart eines Lösungsmittels (D) oder eines Gemischs mehrerer Lösungsmittel (D).

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 70°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen. Es kann aber auch bei Überdruck gearbeitet werden, wie bei Drücken zwischen 1100 hPa und 3000 hPa Absolutdruck, insbesondere bei kontinuierlicher Arbeitsweise, wenn z.B. sich diese Drücke bei geschlossenen Systemen durch den Druck beim Pumpen und durch den Dampfdruck der eingesetzten Materialien bei erhöhten Temperaturen ergeben.

Besonders bevorzugt wird zunächst (B) mit Lösungsmittel (D) versetzt und zu diesem die Stickstoffverbindung (C) zugegeben. In einer weiteren besonders bevorzugten Ausführungsform wird zunächst (B) mit Lösungsmittel (D) versetzt und zu diesem eine Lösung von (C) in Lösungsmittel (D) zugegeben, wobei es sich um jeweils das gleiche Lösungsmittel (D) handeln kann oder auch jeweils verschiedene Lösungsmittel (D) eingesetzt werden können.

Als gegebenenfalls eingesetztes Lösungsmittel (D) kommen hierbei bevorzugt solche zum Einsatz, die eine ausreichende Löslichkeit der Komponenten (B), (C) oder der Katalysatorzubereitung (K) ermöglichen. Beispiele für solche Lösungsmittel (D) sind ein- und mehrwertige Alkohole, wie Methanol, Ethanol, n-Propanol, Isopropanol, n-Butanol, iso-Butanol, sec-Butanol, 1,2-Ethandiol, 1,2-Propandiol, 1,3-Propandiol, Polypropylenglycol, Polyethylenglycol, 1,2-Butandiol, 1,3-Butandiol, Polybutylenglycol und Glycerin; Ether, wie Methyl-tert.-butylether, Di-tert.-butylether, Di-, Tri- oder Tetraethylenglycoldimethylether; gesättigte Kohlenwasserstoffe, wie n-Hexan, Cyclohexan, n-Heptan, n-Octan und isomere Octane, wie 2-Ethylhexan, 2,4,4-Trimethylpentan, 2,2,4-Trimethylpentan und 2-Methylheptan, sowie Gemische gesättigter Kohlenwasserstoffe mit Siedebereichen zwischen 60-300°C, wie sie unter den Handelsnamen Exxsol™, Hydroseal® oder Shellsol® erhältlich sind; aromatische Lösungsmittel, wie Benzol, Toluol, o-, m- oder p-Xylol, Solvent Naphta und Mesitylen; Acetale, wie Methylal, Ethylhexylal, Butylal, 1,3-Dioxolan und Glycerinformal; Carbonate, wie 1,3-Dioxolan-2-on, Diethylcarbonat, Dimethylcarbonat, Dipropylcarbonat, Propylenglycolcarbonat, Ethylencarbonat; Ketone, wie Methyl-iso-butylketon, Methylethylketon, Methyl-isoamylketon, Di-iso-butylketon, Aceton und Cyclohexanon; Ester, wie Ethylacetat, n-Butylacetat, Ethylenglykoldiacetat, gamma-Butyrolacton, 2-Methoxypropylacetat (MPA) und Ethylethoxypropionat; Amide, wie N,N-Dimethylformamid, N,N-Dimethylacetamid, N-Methyl-2-pyrrolidon und N-Ethyl-2-pyrrolidon; Acetonitril; Dimethylsulfoxid; sowie Mischungen hiervon.

Besonders bevorzugte Lösungsmittel (D) sind Methanol, Ethanol, n-Propanol, Isopropanol, n-Hexan, Cyclohexan, n-Heptan, n-Octan und isomere Octane, wie 2-Ethylhexan, 2,4,4-Trimethylpentan, 2,2,4-Trimethylpentan und 2-Methylheptan, Gemische gesättigter Kohlenwasserstoffe mit Siedebereichen zwischen 60 bis 300°C, o-, m- oder p-Xylol, Methyl-iso-butylketon, Methylethylketon, Aceton, n-Butylacetat, 2-Methoxypropylacetat (MPA) oder homogene Mischungen hiervon.

Bei der Herstellung der Katalysatorzubereitung (K) wird bevorzugt Lösungsmittel (D) eingesetzt.

Die erfindungsgemäß eingesetzte Katalysatorzubereitung (K) wird bevorzugt durch Mischen von insgesamt 1,0 Mol Metallverbindungen (B) mit 0,1 bis 10,0 Mol, besonders bevorzugt 0,5 bis 4,0 Mol, insbesondere 1,0 bis 3,0 Mol, Stickstoffverbindungen (C), gegebenenfalls mit Lösungsmittel (D), hergestellt.

Falls zur Herstellung der Katalysatorzubereitung (K) Lösungsmittel (D) verwendet wird, handelt es sich bevorzugt um Mengen von jeweils 0,1 bis 10 Gewichtsteilen, bezogen auf einen Gewichtsteil der Gesamtmenge von (B) und (C).

Anstelle von oder zusätzlich zu Lösungsmittel (D) können auch, falls erwünscht, andere zur Herstellung der erfindungsgemäßen Zusammensetzungen ohnehin verwendeten Komponenten eingesetzt werden, sofern sie mit Komponenten (B) und/oder (C) mischbar sind, wie z.B. Organosiliciumverbindungen (A), Silane (F) oder organische Säuren (G). Bevorzugt handelt es sich bei Katalysatorzubereitung (K) bei Raumtemperatur und dem Druck der umgebenden Atmosphäre um Lösungen.

Zusätzlich zu den Komponenten (A), (B) und (C) sowie gegebenenfalls (D) können die erfindungsgemäßen Zusammensetzungen (Z) weitere Stoffe enthalten, die unterschiedlich sind zu Komponenten (A), (B), (C) und (D), wie z.B. Füllstoffe (E), Silane (F), organische Säuren (G) und weitere Bestandteile (H).

Bei den in den erfindungsgemäßen Zusammensetzungen (Z) gegebenenfalls eingesetzten Füllstoffen (E) kann es sich um beliebige, bisher bekannte Füllstoffe handeln.

Beispiele für gegebenenfalls eingesetzte Füllstoffe (E) sind nicht verstärkende Füllstoffe, also Füllstoffe mit einer BET-Oberfläche von vorzugsweise bis zu 50 m²/g, wie Quarzpulver, Quarzgranulat, geschmolzene Quarzpulver, Quarzglaspulver, Glaspulver, Diatomeenerde; in Wasser unlösliche Silikate, wie Calciumsilikat, Magnesiumsilikat, Zirkoniumsilikat, Talkum, Kaolin, Zeolithe; Metalloxidpulver, wie Aluminium-, Titan-, Eisen- oder Zinkoxide bzw. deren Mischoxide, Bariumsulfat, Calciumcarbonat, Marmormehl, Gips, Siliciumnitrid, Siliciumcarbid, Bornitrid, Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, Magnesiumhydroxid, hohlkugelförmiger Füllstoffe, wie keramische Mikrokugel, wie z.B. solche erhältlich unter der Handelsbezeichnung Zeeospheres™ bei der Fa. 3M Deutschland GmbH in D-Neuss; faserförmige Füllstoffe, wie Wollastonit, Montmorrilonit, Bentonit sowie geschnittene und/oder gemahlene Fasern aus Glas (Glaskurzfasern), Mineralwolle oder Kunststoff. Die genannten Füllstoffe können hydrophobiert sein, beispielsweise durch die Behandlung mit Organosilanen bzw. -siloxanen oder mit Stearinsäure.

Bevorzugt handelt es sich bei den gegebenenfalls eingesetzten Füllstoffen (E) um anorganische Füllstoffe, besonders bevorzugt um anorganische siliciumhaltige Füllstoffe, insbesondere um solche aus natürlichen Quellen, wie Quarz, Quarzpulver, Quarzgranulat, geschmolzene Quarzpulver, Cristobalit, Talkum, oder um faserförmige siliciumhaltige Füllstoffe aus natürlichen Quellen wie Montmorillonit und Wollastonit, oder um synthetische siliciumhaltige Produkte wie Quarzglaspulver, pyrogene Kieselsäure, welche durch Flammenhydrolyse von z.B. Tetrachlorsilan in einer Knallgasflamme erhalten werden kann ("fumed silica"), oder um amorphen Quarz, welcher durch thermische Nachbehandlung von pyrogener Kieselsäure erhältlich ist ("fused silica"), oder um anorganische faserförmige synthetische siliciumhaltige Füllstoffe wie geschnittene oder gemahlene Glaskurzfasern.

Ganz besonders bevorzugt handelt es sich bei den gegebenenfalls eingesetzten Füllstoffen (E) um Quarzpulver, Quarzgranulat, geschmolzene Quarzpulver, Quarzglaspulver, Cristobalit, geschnittene oder gemahlene Glaskurzfasern, Montmorillonit, Wollastonit oder Talk, die ggf. oberflächenbehandelt sein können. Bevorzugt sind die gegebenenfalls eingesetzten Füllstoffe (E) nicht oberflächenbehandelt.

Die gegebenenfalls eingesetzten Füllstoffe (E) können sowohl jeder einzeln als auch in beliebiger Mischung untereinander eingesetzt werden. Bevorzugt werden als Komponente (E) Mischungen aus feinteiligen und grobkörnigen Füllstoffen eingesetzt.

Die erfindungsgemäß gegebenenfalls eingesetzten feinteiligen Füllstoffe (E) weisen Korngrößen von bevorzugt 0,02 µm bis kleiner 200 µm, besonders bevorzugt 0,3 µm bis 100 µm, auf. Im Falle von faserförmigen Füllstoffen entspricht dies der längsten Ausdehnung der Faser. Als feinteiliger Füllstoff (E) wird insbesondere Quarz eingesetzt.

Die erfindungsgemäß gegebenenfalls eingesetzten grobkörnigen Füllstoffe (E) weisen Korngrößen von bevorzugt 0,2 mm bis 10 mm, besonders bevorzugt von 0,2 mm bis 5 mm, insbesondere von 0,2 mm bis 3 mm, auf. Als grobkörniger Füllstoff (E) wird insbesondere Quarz eingesetzt.

Die erfindungsgemäß gegebenenfalls eingesetzte Komponente (E) besteht bevorzugt zu mindestens 20 Gew.-% aus grobkörnigen Füllstoffen mit Korngrößen von 0,2 mm bis 10 mm, besonders bevorzugt zu 40 bis 80 Gew.-% aus grobkörnigen Füllstoffen mit Korngrößen von 0,2 bis 10 mm, jeweils bezogen auf die Gesamtmenge (E).

Die Korngrößenverteilung von Partikeln >500 µm wird bevorzugt mit einem Luftstrahlsieb e200 LS von der Firma ALPINE analysiert mit Analysensieben entsprechend den Anforderungen nach DIN ISO 3310-1. Die Analyse der Partikelgrößenverteilung im Bereich von etwa 0,02 bis 500 µm wird bevorzugt mit einem CILAS 1064 PARTICLE SIZE ANALYZER von der Firma Cilas durchgeführt.

Falls die erfindungsgemäßen Zusammensetzungen (Z) Füllstoffe (E) enthalten, handelt es sich um Mengen von insgesamt bevorzugt 70 bis 99 Gewichtsteilen, besonders bevorzugt von 75 bis 95 Gewichtsteilen, insbesondere von 85 bis 95 Gewichtsteilen, jeweils bezogen auf 100 Gewichtsteile der Zusammensetzung. Die erfindungsgemäßen Zusammensetzungen (Z) enthalten bevorzugt Füllstoffe (E).

Beispiele für gegebenenfalls eingesetzte Komponente (F) sind Organosiliciumverbindungen der Formel

R¹⁴ₓ(R¹³O)₄₋ₓSi (IV),

wobei
R¹⁴ gleich oder verschieden sein kann und einen einwertigen, SiC-gebundenen, gegebenenfalls substituierten Kohlenwasserstoffrest, einen zweiwertigen SiC-gebundenen Kohlenwasserstoffrest oder Si-gebundenes Halogenatom bedeutet,
R¹³ gleich oder verschieden sein kann und einen einwertigen, gegebenenfalls substituierten Kohlenwasserstoffrest bedeutet und
x 0, 1, 2 oder 3, bevorzugt 0 oder 1, ist.

Beispiele und bevorzugte Bereiche für Rest R¹⁴ sind die für Rest R angegebenen Beispiele und bevorzugten Bereiche.

Beispiele und bevorzugte Bereiche für Rest R¹³ sind die für Rest R¹ angegebenen Beispiele und bevorzugten Bereiche.

Beispiele für Organosiliciumverbindungen (F) sind Organoalkoxysilane, wie Methyltrimethoxysilan, Methyltriethoxysilan, Vinyltrimethoxysilan, Vinyltriethoxysilan, Phenyltrimethoxysilan, Phenyltriethoxysilan, n-Butyltrimethoxysilan, n-Butyltriethoxysilan, iso-Butyltrimethoxysilan, iso-Butyltriethoxysilan, tert.-Butyltrimethoxysilan, tert.-Butyltriethoxysilan, n-Octyltrimethoxysilan, n-Octyltriethoxysilan, (2,4,4-Trimethylpentyl)trimethoxysilan, (2,4,4-Trimethylpentyl)triethoxysilan, n-Hexadecyltrimethoxysilan, n-Hexadecyltriethoxysilan, n-Nonacosyltriethoxysilan, n-Nonacosyltrimethoxysilan, n-Triacontyltrimethoxysilan, n-Triacontyltriethoxysilan, Cyclohexyltrimethoxysilan, Cyclohexyltriethoxysilan, Methylvinyldimethoxysilan, Methylvinyldiethoxysilan, n-Hexadecylmethyldimethoxysilan, n-Hexadecylmethyldiethoxysilan, (2,4,4-Trimethylpentyl)methyldimethoxysilan, (2,4,4-Trimethylpentyl)methyldiethoxysilan, n-Octylmethyldimethoxysilan, n-Octylmethyldiethoxysilan, (Cyclohexyl)methyldimethoxysilan, (Cyclohexyl)methyldiethoxysilan, Tris[3-(trimethoxysilyl)propyl]isocyanurat, Tris[3-(triethoxysilyl)propyl]isocyanurat, Tetraethoxysilan oder Tetramethoxysilan, oder funktionelle Silane, wie Methacryloxymethyltriethoxysilan, Methacryloxymethyltrimethoxysilan, (Methacryloxymethyl)methyldiethoxysilan, (Methacryloxymethyl)methyldimethoxysilan, 3-Methacryloxypropyltrimethoxysilan, 3-Methacryloxypropyltriethoxysilan, N-Trimethoxysilylmethyl-O-methylcarbamat, N-Triethoxysilylmethyl-O-methylcarbamat, N-Dimethoxy(methyl)silylmethyl-O-methylcarbamat, N-Diethoxy(methyl)silylmethyl-O-methylcarbamat, 3-Glycidoxypropyltrimethoxysilan, 3-Glycidoxypropyltriethoxysilan, 3-(Triethoxysilyl)propylbernsteinsäureanhydrid, und 3-Mercaptopropyltrimethoxysilan, 3-Mercaptopropyltriethoxysilan, 3-Aminopropyltriethoxysilan, 3-Aminopropyltrimethoxysilan, 3-(2-Aminoethyl)-aminopropyltriethoxysilan und 3-(2-Aminoethyl)-aminopropyltrimethoxysilan.

Gegebenenfalls eingesetzte Organosiliciumverbindungen (F) sind bevorzugt herstellbar nach aus der Literatur bekannten Methoden wie z.B. durch Alkoholyse der entsprechenden Organylchlorsilane oder von Tetrachlorsilan.

Falls die erfindungsgemäßen Massen Organosiliciumverbindungen (F) enthalten, handelt es sich um Mengen von bevorzugt 0,5 bis 100 Gewichtsteilen, besonders bevorzugt von 0,5 bis 50 Gewichtsteilen, insbesondere von 0,5 bis 35 Gewichtsteilen, jeweils bezogen auf 100 Gewichtsteile der Organosiliciumkomponente (A). Die erfindungsgemäßen Massen enthalten bevorzugt Organosiliciumverbindungen (F).

Beispiele für gegebenenfalls eingesetzte organische Säuren (G) sind aliphatische lineare oder verzweigte, gegebenenfalls substituierte Mono-, Di- oder Tricarbonsäuren mit 1 bis 22 Kohlenstoffatomen im Alkylrest oder aromatische, gegebenenfalls substituierte Mono- oder Dicarbonsäuren mit 6 bis 12 Kohlenstoffatomen, wie z.B. Ameisensäure, Essigsäure, n-Octansäure, 6-Methylhexansäure, 2,4,4-Trimethylpentansäure, 3,4,4-Trimethylpentansäure, 2-Ethylhexansäure, Oleinsäure, Stearinsäure, Laurinsäure, Myristinsäure, Palmitinsäure, Capronsäure, Neodecansäure, Benzoesäure, Terephthalsaäure, Phthalsäusäure, Isophthalsäure, Acrylsäure, Methacrylsäure, Oxalsäure, Fumarsäure, Bernsteinsäure, Malonsäure, Maleinsäure, Undec-10-ensäure und Undecansäure; 2-Oxo- und 3-Oxocarbonsäuren, wie die 2-Oxopropansäure, die 3-Oxobutansäure und die Acetondicarbonsäure; sowie Hydroxycarbonsäuren, wie D,L-Weinsäure, meso-Weinsäure, 4-Hydroxybuttersäure, Ricinolsäure, 12-Hydroxystearinsäure und Zitronensäure.

Bevorzugte Säuren (G) sind n-Octansäure, 2-Ethylhexansäure, Laurinsäure, Myristinsäure, Capronsäure, Neodecansäure, Malonsäure, 3-Oxobutansäure, Acetondicarbonsäure, D,L-Weinsäure, meso-Weinsäure, 4-Hydroxybuttersäure oder Zitronensäure.

Falls die erfindungsgemäßen Zusammensetzungen (Z) organische Säuren (G) enthalten, handelt es sich um Mengen von vorzugsweise 0,1 bis 10 Mol Carbonsäuregruppen, besonders bevorzugt 0,1 bis 5 Mol Carbonsäuregruppen, insbesondere 0,5 bis 2 Mol Carbonsäuregruppen, jeweils bezogen auf 1 Mol Komponente (C). Beispiele für gegebenenfalls eingesetzte weitere Bestandteile (H) sind Pigmente, Riechstoffe, Oxidationsinhibitoren, Siloxane, die unterschiedlich sind zu Siloxanen (A1), Mittel zur Beeinflussung der elektrischen Eigenschaften, flammabweisend machende Mittel, alle bisher in vernetzbaren Massen bekannte weiteren Stoffe, wie z.B. bei Raumtemperatur und einem Druck von 900 bis 1100 hPa wasserlösliche Silikate, wie Natriumorthosilikat, Dinatriumdisilikat, Dinatriumtrisilikat, Kaliumsilikat; Wasser, auch adsorbiert, z.B. an Zeolithe, Cyclodextrine oder als Kristallwasser gebunden in Salzen, wie Natriumsulfat-decahydrat, Aluminiumsulfat-octadecahydrat, Calciumsulfat-dihydrat Dinatriummetasilikat-Nonahydrat und Dinatriummetasilikat-Pentahydrat.

Beispiele für gegebenenfalls eingesetzte Pigmente (H) sind anorganische Pigmente wie Eisenoxide (gelb, schwarz, rot), Chrom(III)-oxid, Titandioxid und Ruß; Farbstoffe, wie Phthalocyanine und Azoverbindungen; Effektpigmente zur Erzeugung eines Metallic-Effekts wie Plättchen aus Gold, Silber, Kupfer, Aluminium, Silicium, Glimmer, ggf. beschichtet z.B. mit FeTiO₃, Fe₂O₃, TiO₂, oder Flüssigkristallpigmente zur Erzeugung eines goniochromatischen Farbeffekts. Die Pigmente können in Pulverform oder dispergiert in einer geeigneten Flüssigkeit, bevorzugt in flüssiger Komponente (A), (F) und/oder (G), eingesetzt werden. Des Weiteren können die Pigmente auf die grobteiligen Füllstoffe aufgezogen, als oberflächliche Beschichtung, eingesetzt werden.

Beispiele für Siloxane (H) sind im Wesentlichen lineare Polydiorganosiloxane, die frei von Si-gebundenen Hydroxygruppen und frei von Si-gebundenen Organyloxygruppen sind, wie z.B. mit Trimethylsilylgruppen terminierte Polydiorganosiloxane; sowie im Wesentlichen lineare Polydiorganosiloxane mit terminalen Si-gebundenen Hydroxygruppen und/oder Organyloxygruppen, wie z.B. Trimethoxysilyl-, Triethoxysilyl-, Methyl-dimethoxysilyl-, Methyl-diethoxysilylgruppen, wobei die im Wesentlichen linearen Polydiorganosiloxane bevorzugt mehr als 50 %, besonders bevorzugt mehr als 60 %, Diorganosilyleinheiten, bezogen auf die Gesamtzahl der Siloxaneinheiten pro Molekül, aufweisen.

Falls die erfindungsgemäßen Zusammensetzungen (Z) Siloxane (H) enthalten, handelt es sich um Mengen von 1 bis 20 Gewichtsteilen, bevorzugt 1 bis 10 Gewichtsteilen, jeweils bezogen auf 100 Gewichtsteile Komponente (A). Siloxane (H) werden bevorzugt dann eingesetzt, wenn Komponente (A) aus Siloxanen (A1) besteht.

Falls die erfindungsgemäßen Massen weitere Bestandteile (H) enthalten, die verschieden sind von Siloxanen (H), handelt es sich um Mengen von vorzugsweise 1 bis 100 Gewichtsteilen, besonders bevorzugt 1 bis 50 Gewichtsteilen, insbesondere 1 bis 20 Gewichtsteilen, jeweils bezogen auf 100 Gewichtsteile Komponente (A).

Vorzugsweise handelt es sich bei den erfindungsgemäßen Zusammensetzungen (Z) um solche enthaltend
(A) Organosiliciumkomponente,
(B) Metallverbindung,
(C) Stickstoffverbindung,
   gegebenenfalls (D) Lösungsmittel,
(E) Füllstoffe,
   gegebenenfalls (F) Silane,
   gegebenenfalls (G) organische Säuren und
   gegebenenfalls (H) weitere Bestandteile.

Bevorzugt handelt es sich bei den erfindungsgemäßen Zusammensetzungen (Z) um solche enthaltend
(A) Organosiliciumkomponente,
(B) Metallverbindung,
(C) Stickstoffverbindung,
   gegebenenfalls (D) Lösungsmittel,
(E) Füllstoffe,
(F) Silane,
   gegebenenfalls (G) organische Säuren und
   gegebenenfalls (H) weitere Bestandteile.

Besonders bevorzugt handelt es sich bei den erfindungsgemäßen Zusammensetzungen (Z) um solche enthaltend
(A) Organosiliciumkomponente,
(B) Metallverbindung,
(C) Stickstoffverbindung,
   gegebenenfalls (D) Lösungsmittel,
(E) Füllstoffe,
(F) Silane,
(G) organische Säuren und
   gegebenenfalls (H) weitere Bestandteile.

Eine weitere bevorzugte Variante der erfindungsgemäßen Zusammensetzungen (Z) sind solche enthaltend
(A1) Organosiloxane,
(B) Metallverbindung,
(C) Stickstoffverbindung,
   gegebenenfalls (D) Lösungsmittel,
(E) Füllstoffe,
(F) Silane,
   gegebenenfalls (G) organische Säuren,
(H) Siloxane und
   gegebenenfalls (H) weitere Bestandteile, die verschieden von Siloxanen (H) sind.

Bei einer weiteren bevorzugten Variante handelt es sich bei den erfindungsgemäßen Zusammensetzungen (Z) um solche enthaltend
(A) Organosiliciumkomponente,
(B) Metallverbindung,
(C) Stickstoffverbindung,
   gegebenenfalls (D) Lösungsmittel,
(E) Füllstoffe in Mengen von 70 bis 99 Gewichtsteilen, bezogen auf 100 Gewichtsteile der Zusammensetzung (Z),
   gegebenenfalls (F) Silane,
   gegebenenfalls (G) organische Säuren und
   gegebenenfalls (H) weitere Bestandteile.

Ganz besonders bevorzugt handelt es sich bei den erfindungsgemäßen Zusammensetzungen (Z) um solche enthaltend
(A) Organosiliciumkomponente,
(B) Metallverbindung,
(C) Stickstoffverbindung,
   gegebenenfalls (D) Lösungsmittel,
(E) Füllstoffe in Mengen von 70 bis 99 Gewichtsteilen, bezogen auf 100 Gewichtsteile der Zusammensetzung (Z), mit der Maßgabe, dass Komponente (E) zumindest zu 20 Gew.-% aus grobkörnigen Füllstoffen mit Korngrößen von 0,2 mm bis 10 mm, bezogen auf die Gesamtmenge (E) besteht,
   gegebenenfalls (F) Silane,
   gegebenenfalls (G) organische Säuren und gegebenenfalls (H) weitere Bestandteile.

Der Anteil der Komponenten (A), (B), (C), (D), (E), (F), (G) und (H) in der erfindungsgemäßen Zusammensetzung (Z) beträgt bevorzugt 95 bis 100 Gew.-%.

Insbesondere werden zur Herstellung der erfindungsgemäßen Zusammensetzungen (Z) außer den Bestandteilen (A), (B), (C), (D), (E), (F), (G) und (H) keine weiteren Bestandteile eingesetzt.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Ein weiterer Gegenstand der vorliegenden Erfindung ist ein Verfahren zur Herstellung der erfindungsgemäßen Zusammensetzungen durch Mischen der einzelnen Komponenten in beliebiger Reihenfolge und auf bisher bekannte Art und Weise.

Bei dem erfindungsgemäßen Verfahren wird bevorzugt aus Organosiliciumkomponente (A) sowie gegebenenfalls Silan (F) und gegebenenfalls Siloxan (H) eine Vormischung hergestellt, anschließend mit der Zubereitung (K) vermischt und danach gegebenenfalls Füllstoffe (E) und gegebenenfalls weitere Bestandteile (H) zugefügt. Die Zubereitung (K) wird hergestellt, indem Metallverbindung (B) gegebenenfalls in einem Lösungsmittel (D) mit Stickstoffverbindung (C) gegebenenfalls in einem Lösungsmittel (D) und organische Säure (G) gegebenenfalls in einem Lösungsmittel (D) vermischt werden, wobei es sich um jeweils das gleiche oder verschiedene Lösungsmittel (D) handeln kann.

In einer weiteren besonders bevorzugten Ausführungsform des erfindungsgemäßen Verfahrens kann aus Metallverbindung (B), Stickstoffverbindung (C) sowie gegebenenfalls Lösungsmittel (D) und gegebenenfalls organische Säure (G) eine Katalysatorzubereitung (K) hergestellt werden, die dann mit Komponente (A) sowie gegebenenfalls weitere Bestandteile (H) und Silan (F) vermischt wird.

In einer insbesondere bevorzugten Ausführungsform werden zunächst die grobkörnigen Füllstoffe (E) gegebenenfalls mit Pigmenten (F) vorgemischt, danach wird dazu ein Gemisch der Organosiliciumkomponente (A) gegebenenfalls mit Organosiliciumkomponente (F) und gegebenenfalls mit Siloxan (H) innig gemischt, dazu wird dann die separat hergestellte Mischung aus Katalysatorzubereitung (K) und gegebenenfalls Komponenten (F) und gegebenenfalls (G) zugegeben, danach feinteilige Füllstoffe (E).

Das Vermischen kann bei Raumtemperatur und dem Druck der umgebenden Atmosphäre, also etwa 900 bis 1100 hPa, erfolgen. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen. Es kann aber auch bei Überdruck gearbeitet werden, wie bei Drücken zwischen 1100 hPa und 3000 hPa Absolutdruck, insbesondere bei kontinuierlicher Arbeitsweise, wenn z.B. sich diese Drücke bei geschlossenen Systemen durch den Druck beim Pumpen und durch den Dampfdruck der eingesetzten Materialien bei erhöhten Temperaturen ergeben.

Bevorzugt wird bei der Temperatur gemischt, die sich aus der Temperatur der Rohstoffe plus Energieeintrag beim Mischen ergibt, das sind in der Regel Temperaturen zwischen 10 und 50°C, besonders bevorzugt bei Temperaturen von 10 bis 40°C, insbesondere bei Temperaturen von 15 bis 30°C, wobei nach Bedarf geheizt oder gekühlt werden kann.

Das erfindungsgemäße Verfahren kann kontinuierlich, diskontinuierlich oder semikontinuierlich durchgeführt werden.

Die erfindungsgemäßen Zusammensetzungen (Z) sind in einer bevorzugten Ausführungsform knetbare, bei Raumtemperatur sehr hochviskose Mischungen von kittähnlicher Konsistenz, die jedoch bei entsprechend hohem mechanischen Druck zum Fließen gebracht werden können.

Die erfindungsgemäßen Massen (Z) haben in einer weiteren bevorzugten Ausführungsform die Konsistenz von nassem Sand. Sie sind förderbar, z.B. auf Transportbändern und haben eine bis zur Weiterverarbeitung ausreichende Lagerfähigkeit.

Die erfindungsgemäßen Zusammensetzungen (Z) können durch mechanischen Druck bei Temperatur der Umgebung oder gegebenenfalls bei erhöhter Temperatur in beliebige Form gebracht werden.

Die erfindungsgemäßen Massen vernetzen bei Temperaturen der Umgebung, üblicherweise Raumtemperatur, oder bei Temperaturen oberhalb Raumtemperatur durch Kondensationsreaktion unter Abspaltung von Alkohol und gegebenenfalls Wasser.

Die Vernetzung der erfindungsgemäßen Massen (Z) beginnt bereits mit Vermischen der Komponenten (A), (B) und (C) und den gegebenenfalls eingesetzten Komponenten (E), (F), (G) und (H). Falls Komponente (A) keine Si-gebundenen Hydroxylgruppen enthält, muss Wasser (H) hinzugefügt werden.

Durch Erhöhung der Temperatur, bevorzugt auf 50 bis 200°C, besonders bevorzugt auf 80 bis 160°C, insbesondere bei 80 bis 130°C, wird eine Beschleunigung der Vernetzung bewirkt. Formgebung und Vernetzung können auch in einem gemeinsamen Schritt durchgeführt werden.

Die erfindungsgemäßen Zusammensetzungen (Z) können für alle Zwecke eingesetzt werden, für die auch bisher vernetzbare Siliconmassen eingesetzt worden sind. Die Verarbeitung der erfindungsgemäßen Mischungen erfolgt nach bekannten Verfahren.

Ein weiterer Gegenstand der vorliegenden Erfindung sind Formkörper hergestellt durch Vernetzung der erfindungsgemäßen Zusammensetzungen (Z).

Formkörper können aus den erfindungsgemäßen Mischungen z.B. durch das an sich seit langem bekannte Verfahren des Spritzpressens hergestellt werden. Dazu wird die Mischung mit Hilfe von mechanischem Druck in ein entsprechendes Formnest injiziert. Die Form ist in der Regel zweigeteilt und wird während des Spritzpressvorgangs durch eine hydraulische Presse verschlossen. Die Form ist auf die gewünschte Temperatur vorgeheizt, wodurch einerseits das Fließen der Masse erleichtert wird und andererseits die Aushärtung beschleunigt wird. Nach Ende des Spritzpressvorganges wird die Form noch solange geschlossen gehalten, bis die Formkörper eine Konsistenz erreicht haben, die eine zerstörungsfreie Entnahme der Formkörper gestattet. Formnester für Prüfkörper sind zum Beispiel in DIN EN ISO 10724-1:2002-04 beschrieben.

Bei den erfindungsgemäßen Formkörpern handelt es sich bevorzugt um künstliche Steine.

Zur Herstellung von künstlichen Steinen wird bevorzugt wie folgt vorgegangen: Die erfindungsgemäßen Massen werden dabei zunächst in eine Form gegeben, wobei zur Vermeidung von Gaseinschlüssen anschließend Unterdruck angelegt wird. Eine Verdichtung kann bereits in diesem Schritt stattfinden, indem bevorzugt die erfindungsgemäße Masse über die Formen in Vibration versetzt wird. Daran schließt sich eine weitere Verdichtung der Masse durch Aufbringen von mechanischem Druck an. Dieser Kompaktierungsprozess, d.h. die Verdichtung ggf. unter Vibration im Vakuum, dauert bevorzugt 1 bis 3 Minuten. Falls der Formkörper in der Form ausgehärtet wird, dann wird gleichzeitig mit einem der vorangegangenen Schritte oder anschließend die Form für einen Zeitraum von bevorzugt 30 bis 120 Minuten auf Temperaturen oberhalb Raumtemperatur, bevorzugt bei 50 bis 200°C, besonders bevorzugt bei 80 bis 160°C, insbesondere bei 80 bis 130°C, erwärmt. Danach wird der Formkörper der Form entnommen. Alternativ kann, was besonders bevorzugt ist, der noch nicht ausgehärtete Formkörper nach dem Abschluss der Formgebung, d.h. nach dem mechanischen Pressen, der Form entnommen werden und in einem anschließenden separaten Schritt in einem separaten Apparat bei den oben genannten Temperaturen und Zeiten ausgehärtet werden. Danach erfolgt - unabhängig vom Aushärteverfahren - vorteilhafterweise eine weitere Lagerung bei Umgebungstemperatur für eine Dauer von mindestens einer Stunde, bevorzugt von mindestens 10 Stunden, besonders bevorzugt von 14 bis 48 Stunden. Der so erhaltene Formkörper kann dann nach bekannten Verfahren weiterverarbeitet werden, wie z.B. durch Schleifen, Polieren der Oberflächen und Zuschneiden.

Ein weiterer Gegenstand der vorliegenden Erfindung ist ein Verfahren zur Herstellung von künstlichen Steinen, dadurch gekennzeichnet, dass die erfindungsgemäßen Zusammensetzungen (Z) geformt und vernetzen gelassen werden.

Die erfindungsgemäßen Zusammensetzungen (Z) haben insbesondere den Vorteil, dass sie in einem Temperaturbereich von 18 bis 25°C, eine gute Verarbeitungszeit von bevorzugt mehr als 30 Minuten, besonders bevorzugt mehr als 45 Minuten, insbesondere mehr als 60 Minuten, aufweisen, aber dennoch bei erhöhter Temperatur, bevorzugt bei 80 bis 120°C, schnell härten und die so erhaltenen Formkörper bereits nach bevorzugt 14-48 Stunden eine so hohe Härte und Biegefestigkeit aufweisen, dass eine Weiterverarbeitung (Schneiden, Schleifen, Polieren) möglich ist.

Die erfindungsgemäßen Zusammensetzungen (Z) haben insbesondere den Vorteil, dass durch die Kombination mit der Metallverbindung (B) eine größere Menge Stickstoffverbindung (C) eingesetzt werden kann, was sich günstig auf die Nachhärtung und damit auf die Endhärte sowie Endbiegefestigkeit, d.h. nach 30-tägiger Lagerung der Formkörper bei Umgebungstemperatur, auswirkt, die Mischungen aber immer noch eine lange Verarbeitungszeit aufweisen.

Die erfindungsgemäßen Mischungen (Z) sowie die daraus hergestellten Formkörper haben insbesondere den Vorteil, dass sie keine Verfärbung zeigen, d.h. dass sie weder eine starke Eigenfarbe aufweisen noch dass die Formkörper bei UV-Bestrahlung, z.B. in einem SUNTEST CPS+ der Firma Atlas Material Testing Technology gemäß DIN EN ISO 11431:2003-1, sich verfärben.

Die erfindungsgemäßen Zusammensetzungen (Z) haben insbesondere den Vorteil, dass der Organosiliciumverbindung (A) die Härter-Komponenten (B) und (C) von vornherein zugegeben werden können, ohne dass dadurch die Verarbeitungszeit negativ beeinflusst wird.

Die erfindungsgemäßen Zusammensetzungen (Z) haben insbesondere den Vorteil, dass sie einfach und sehr gut reproduzierbar herstellbar sind.

In den nachstehend beschriebenen Beispielen beziehen sich alle Viskositätsangaben, sofern nicht anders angegeben, auf eine Temperatur von 25°C. Sofern nicht anders angegeben, werden die nachstehenden Beispiele bei einem Druck der umgebenden Atmosphäre, also etwa bei 1013 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

In der vorliegenden Erfindung werden Stoffe durch Angabe von Daten charakterisiert, die bevorzugt mittels instrumenteller Analytik erhalten werden. Die zugrundeliegenden Messungen werden entweder öffentlich zugänglichen Normen folgend durchgeführt oder nach speziell entwickelten Verfahren ermittelt. Um die Klarheit der mitgeteilten Lehre zu gewährleisten, sind die verwendeten Methoden hier angegeben:

### Viskosität

In den folgenden Beispielen wird die dynamische Viskosität der Organosiliciumverbindungen nach DIN 53019 gemessen. Dabei wurde bevorzugt wie folgt vorgegangen: Die Viskosität wird, sofern nicht anders angegeben, bei 25°C mittels eines Rotationsrheometers "Physica MCR 300" von der Firma Anton Paar gemessen. Dabei wird für Viskositäten von 1 bis 200 mPa·s ein koaxiales Zylinder-Messsystem (CC 27) mit einem Ring-Messspalt von 1,13 mm genutzt und für Viskositäten von größer als 200 mPa·s ein Kegel-Platte-Messsystem (Searle-System mit Messkegel CP 50-1) verwendet. Die Schergeschwindigkeit wird der Polymerviskosität angepasst (1 bis 99 mPa·s bei 100 s⁻¹; 100 bis 999 mPa·s bei 200 s⁻¹; 1000 bis 2999 mPa·s bei 120 s⁻¹; 3000 bis 4999 mPa·s bei 80 s⁻¹; 5000 bis 9999 mPa·s bei 62 s⁻¹; 10000 bis 12499 mPa·s bei 50 s⁻¹; 12500 bis 15999 mPa·s bei 38,5 s⁻¹; 16000 bis 19999 mPa·s bei 33 s⁻¹; 20000 bis 24999 mPa·s bei 25 s⁻¹; 25000 bis 29999 mPa·s bei 20 s⁻¹; 30000 bis 39999 mPa·s bei 17 s⁻¹; 40000 bis 59999 mPa·s bei 10 s⁻¹; 60000 bis 149999 bei 5 s⁻¹; 150000 bis 199999 mPa·s bei 3,3 s⁻¹; 200000 bis 299999 mPa·s bei 2,5 s⁻¹; 300000 bis 1000000 mPa·s bei 1,5 s⁻¹.

Nach Temperierung des Messsystems auf die Messtemperatur wird ein dreistufiges Messprogramm bestehend aus einer Einlaufphase, einer Vorscherung und einer Viskositäts-Messung angewandt. Die Einlaufphase erfolgt durch stufenweise Erhöhung der Schergeschwindigkeit innerhalb einer Minute auf die oben angegebene von der zu erwartenden Viskosität abhängige Sschergeschwindigkeit bei der die Messung erfolgen soll. Sobald diese erreicht ist, erfolgt bei konstanter Schergeschwindigkeit die Vorscherung für 30 s, anschließend werden zur Bestimmung der Viskosität 25 Einzelmessungen für je 4,8 s durchgeführt, aus denen der Mittelwert bestimmt wird. Der Mittelwert entspricht der dynamischen Viskosität, die in mPa·s angegeben wird.

### Beschreibung der Bestimmung der Molekulargewichtsverteilungen

Methode: Size Exclusion Chromatography (SEC) nach DIN 55672-1 Durchflussgeschwindigkeit: 1,00 mL/min
Injektionssystem: Autosampler Agilent 1200 (Agilent Technologies)
Injektionsvolumen: 100 µL
Eluent: Im Falle von phenylgruppenhaltigen Produkten wurde Tetrahydrofuran >99,5%, stabilisiert mit 250 ppm 2,6-Di-tert-butyl-4-methylphenol (BHT) verwendet; im Falle von nicht phenylgruppenhaltigen Materialien wurde Toluol >99,9%, p.A., eingesetzt. Alle Chemikalien sind käuflich erhältlich z.B. bei der Firma Merck KGaA, DE-Darmstadt.
Säule: Stationäre Phase: Polystyrol-divinylbenzol von der Firma Agilent Technologies

Es wurden vier Säulen hintereinandergeschaltet, bestehend aus einer 50 mm langen Vorsäule und drei je 300 mm langen Trennsäulen. Alle Säulen hatten einen Innendurchmesser von 7,8 mm. Die verwendeten Gele hatten eine Partikelgröße von 5 µm. Die Porengröße der Vorsäule betrug 500 Å, die der drei Trennsäulen betrug der Reihenfolge nach 10000 Å, 500 Å und 100 Å.

Säulentemperatur: Ofentemperatur 45°C. Die Konzentration wurde mit einem RI-Detektor ermittelt (Messprinzip Deflexion, Typ: Agilent 1200; Zellvolumen: 8 µL; Temperatur: 45°C

Das System wurde mit ebenfalls von der Fa. Agilent käuflich erhältlichen Polystyrolstandards kalibriert. Konzentration: 0,4 g/L (EasiCal, fertige Polystyrol-Kalibriermittel; Injektionsvolumen: 100 µL. Als interner Standard für Toluol als Eluent wurde Tetrahydrofuran als Markersubstanz verwendet und als interner Standard für Tetrahydrofuran als Eluent wurde Toluol als Markersubstanz verwendet. Anpassen von Kalibrierkurven: Polynomeller Fit PSS 3. Ordnung. Probenvorbereitung: Etwa 15-50 mg der zu messenden Probe wurden im jeweiligen Eluent gelöst (c= etwa 3-10 mg/mL). Die Probenmenge wurde so bemessen, dass ein deutliches RI-Signal erhalten werden konnte. Alle Proben ließen sich vollständig im Eluenten lösen. Auswertung: Die ermittelten Molgewichte wurden jeweils auf ganze Hunderter gerundet.

### Gelzeit

In der vorliegenden Erfindung wurde die Gelierzeit in Anlehnung an die Normen DIN 16945 Blatt 1, DIN 16919 und DIN EN 14022 mit einem Geltimer von der Forma GELNORM® mit Steuergerät ST-1 sowie Thermoblock GT mit Regelgerät Thermograph TC-3 gemessen. Die Herstellung der Mischungen sowie die Durchführung der Messung erfolgten wie im Beispiel B1 beschrieben. Es wurde ein Messstempel aus Aluminiumdraht verwendet. Der Hubzyklus des Messstempels betrug 10 Sekunden. Es wurden jeweils zwei Gelzeit-Messungen bei 25°C und 100°C durchgeführt. Der in Tabelle 1 angegebene Wert entspricht dem Mittelwert der beiden Einzelmessungen bei der jeweiligen Messtemperatur. Die Messung wurde abgebrochen, wenn nach 60 min keine Vergelung der Mischung eingetreten war, in diesem Fall wurde die Gelzeit mit >60 min angegeben.

### Verarbeitungszeit

Zur Bestimmung der Verarbeitungszeit wurde die zu prüfende Mischung in eine PTFE-Form gegeben, sodass die Füllhöhe 10 mm betrug. Die Mischung wurde bei 23°C gelagert, und es wurde alle 5 min die Härte Shore A nach DIN EN ISO 868:2003-10 mit einem Durometer Shore A bestimmt. Dabei wurde die Dimensionen Länge x Breite der PTFE-Form so gewählt, dass bis zu 18 Einzelmessungen durchgeführt werden konnten und die Messabstände zueinander und vom Rand der PTFE-Form mindestens 6 mm betrugen. Sobald die Härte um mindestens 5 Shore A gestiegen war, wurde nicht weiter gemessen und der Zeitraum bis zum Härte-Anstieg abzüglich 5 min als Verarbeitungszeit definiert. Verarbeitungszeiten über 90 min wurden in der Tabelle 2 mit >90 min angegeben.

### Biegefestigkeit

In der vorliegenden Erfindung wurde mit Ausnahme von Beispiel B20 die Biegefestigkeit nach ISO 178:2011-04 Verfahren A mit einer Prüfgeschwindigkeit von 2 mm/min bei einer Auflagedistanz von 60 mm gemessen.

Dabei wurde bevorzugt wie folgt vorgegangen: Es wurden Prüfkörper in den Dimensionen Länge x Breite x Dicke = 80 mm x 10 mm x 4 mm verwendet. Die Messungen wurden an jeweils 5 Prüfkörpern durchgeführt. Die Prüfkörper wurden durch Spritzgießverfahren mit einem Werkzeug mit austauschbaren Formnestplatten entsprechend DIN EN ISO 10724-1:2002-04 wie im Beispiel B6 angegeben hergestellt und unter den im Beispiel B6 angegebenen Bedingungen (Temperatur, Zeit) ausgehärtet. Bei der Prüfung wurden die Probekörper stets so in die Maschine eingelegt, wie sie auch in der Spritzgießform lagen, d.h. mit der Unterseite nach unten. Vor der Messung wurden die Probekörper bei 23°C und 50% rel. Luftfeuchtigkeit 4 Tage gelagert. Der in Tabelle 2 angegebene Wert für die Biegefestigkeit in MPa entspricht dem jeweiligen Mittelwert der Einzelmessungen, gerundet auf ganze Zahlen entsprechend DIN 1333:1992-02 Abschnitt 4.

Die Biegefestigkeit von Beispiel 20 wurde nach DIN EN 14617-2:2008-11 bei einer Auflagedistanz von 180 mm gemessen.

Dabei wurde wie folgt vorgegangen: Es wurden Prüfkörper in den Dimensionen Länge x Breite x Dicke = 200 mm x 50 mm x 10 mm verwendet. Die Messungen wurden an jeweils 3 Prüfkörpern durchgeführt. Die Prüfkörper wurden wie im Beispiel B20 angegeben hergestellt und unter den im Beispiel B20 angegebenen Bedingungen (Temperatur, Zeit) ausgehärtet. Bei der Prüfung wurden die Probekörper stets so in die Maschine eingelegt, wie sie auch in der Spritzgießform lagen, d.h. mit der Unterseite nach unten. Vor der Messung wurden die Probekörper bei 23°C und 50% rel. Luftfeuchtigkeit 4 Tage gelagert. Der in Tabelle 2 angegebene Wert für die Biegefestigkeit in MPa entspricht dem jeweiligen Mittelwert der Einzelmessungen, entsprechend DIN 1333:1992-02 Abschnitt 4 gerundet auf 0,1 MPa.

### Härte Shore-D

Die Härte Shore D wurde nach DIN EN ISO 868:2003-10 bestimmt. Die Messung wurde mit einem Durometer Shore D an Platten-Probekörpern in den Dimensionen Länge x Breite x Dicke = 40 mm x 40 mm x 6 mm durchgeführt, welche durch Spritzgießverfahren mit einem Werkzeug mit austauschbaren Formnestplatten in Anlehnung an DIN EN ISO 10724-1:2002-04 Form 2 wie im Beispiel B6 beschrieben hergestellt und unter den in Beispiel B6 angegebenen Bedingungen (Temperatur, Zeit) ausgehärtet wurden. Die Härte Shore D von Beispiel B20 wurde an den Biegefestigkeits-Prüfkörpern ermittelt. Vor der Messung wurden die Prüfkörper bei 23°C und 50% rel. Luftfeuchtigkeit 4 Tage gelagert. Es wurde an 3 Prüfkörpern jeweils an der Ober- und Unterseite die Härte Shore D gemessen, sodass insgesamt 6 Messwerte erhalten wurden. Der in Tabelle 2 angegebene Wert entspricht dem Mittelwert aus den Einzelmessungen.

**Organosiloxan-Harzmischung A1:** 100 g eines pulverförmigen Organopolysiloxanharzes mit einem mittleren Molekulargewicht Mw von 6600 g/mol, einem mittleren Molekulargewicht Mn von 2000 g/mol und einer Polydispersität von 3,3, mit der durchschnittlichen Formel
(MeSiO_{3/2})_{0,88}(MeSi(OH)O_{2/2})_{0,05}(MeSi(OEt)O_{2/2})_{0,06}(Me₂SiO_{2/2})_{0,01}, 67 g einer Organosiliciumverbindung mit der durchschnittlichen Zusammensetzung (i-OctSi(OMe)O_{2/2})_{0,12}(i-OctSiO_{3/2})_{0,05}(i-OctSi(OMe)₂O_{1/2})_{0,08}(MeSiO_{3/2})_{0,22}(MeSi(OMe)O_{2/2})_{0,33}(MeSi(OMe)₂O_{1/2})_{0,20}
mit einem mittleren Molekulargewicht Mw von 1600 g/mol, einem mittleren Molekulargewicht Mn von 700 g/mol und einer Polydispersität von 2,3 und 8 g eines linearen Polydimethylsiloxans HO-(Me₂SiO)₁₂-H, wurden in einem Rundkolben vorgelegt. Anschließend wurde die Mischung unter Rühren auf 55°C erwärmt, wobei eine homogene Mischung entstand. Danach wurde die Temperatur des Gemisches auf 95°C erhöht und nach dem Erreichen dieser Temperatur ein Druck von 100 mbar angelegt. Unter diesen Bedingungen wurde weitere 2,5 Stunden gerührt, danach ließ man das Gemisch bei einem Druck von 100 mbar auf eine Temperatur von 23°C abkühlen bevor der Unterdruck gebrochen wurde. Die so erhaltene Harzmischung wies eine dynamische Viskosität von 6000 mPa·s bei 25°C und eine dynamische Viskosität von 200 mPa·s bei 80°C auf.

**Organosiloxan-Harzmischung A2:** 100 g eines pulverförmigen Organopolysiloxanharzes mit einem mittleren Molekulargewicht Mw von 6600 g/mol, einem mittleren Molekulargewicht Mn von 2000 g/mol und einer Polydispersität von 3,3 der durchschnittlichen Formel
(MeSiO_{3/2})_{0,88}(MeSi(OH)O_{2/2})_{0,05}(MeSi(OEt)O_{2/2})_{0,06}(Me₂SiO_{2/2})_{0,01}, 18 g (2,4,4-Trimethylpentyl)trimethoxysilan, 55 g einer Organosiliciumverbindung mit der durchschnittlichen Zusammensetzung (Me-SiO_{3/2})₀,₄₉(MeSi(OH)O_{2/2})_{0,02}(Me₂SiO_{2/2})_{0,46}(Me₂Si(OH)O_{1/2})_{0,03} mit einem mittleren Molekulargewicht Mw von 4500 g/mol, einem mittleren Molekulargewicht Mn von 1600 g/mol und einer Polydispersität von 2,8 und 9 g eines linearen Polydimethylsiloxans HO-(Me₂SiO)₁₂-H, wurden in einem Rundkolben vorgelegt. Anschließend wurde die Mischung unter Rühren auf 55°C erwärmt, wobei eine homogene Mischung entstand. Danach wurde die Temperatur des Gemisches auf 95°C erhöht und nach dem Erreichen dieser Temperatur ein Druck von 100 mbar angelegt. Unter diesen Bedingungen wurde weitere 2,5 Stunden gerührt, danach ließ man das Gemisch bei einem Druck von 100 mbar auf eine Temperatur von 23°C abkühlen bevor der Unterdruck gebrochen wurde. Die so erhaltene Harzmischung wies eine dynamische Viskosität von 13000 mPa·s bei 25°C und eine dynamische Viskosität von 270 mPa·s bei 80°C auf.

**Organosiloxan-Harzmischung A3:** 100 g eines pulverförmigen Organopolysiloxanharzes mit einem mittleren Molekulargewicht Mw von 1700 g/mol, einem mittleren Molekulargewicht Mn von 1200 g/mol und einer Polydispersität von 1,4 der durchschnittlichen Formel
(MeSiO_{3/2})_{0,32}(MeSi(OH)O_{2/2})_{0,06}(MeSi(OEt)O_{2/2})_{0,01}(Me₂SiO_{2/2})_{0,06} (PhSiO_{3/2})_{0,23}(PhSi(OH)O_{2/2})_{0,29}(PhSi(OEt)O_{2/2})_{0,03}, 113 g Organosiliciumverbindung mit der durchschnittlichen Zusammensetzung (MeSiO_{3/2})_{0,10}(MeSi(OMe)O_{2/2})_{0,17}(MeSi(OMe)₂O_{1/2})_{0,03}(PhSiO_{3/2})_{0,15} (PhSi(OMe)O_{2/2})_{0,31}(PhSi(OMe)₂O_{1/2})_{0,20}(Me₂SiO_{2/2})_{0,04} mit einem mittleren Molekulargewicht Mw von 1800 g/mol, einem mittleren Molekulargewicht Mn von 900 g/mol und einer Polydispersität von 2,0 und 38 g Phenyltriethoxysilan wurden in einem Rundkolben vorgelegt. Anschließend wurde die Mischung unter Rühren auf 55°C erwärmt, wobei eine homogene Mischung entstand. Danach wurde die Temperatur des Gemisches auf 95°C erhöht und nach dem Erreichen dieser Temperatur ein Druck von 100 mbar angelegt. Unter diesen Bedingungen wurde weitere 2,5 Stunden gerührt, danach ließ man das Gemisch bei einem Druck von 100 mbar auf eine Temperatur von 23°C abkühlen bevor der Unterdruck gebrochen wurde. Die so erhaltene Harzmischung wies eine dynamische Viskosität von 3000 mPa·s bei 25°C und eine dynamische Viskosität von 180 mPa·s bei 80°C auf.

### Herstellung der Härtermischung in den Ausführungsbeispielen B6, B8, B11, B18, B19 und B20

Die Härtermischungen wurden hergestellt, indem eine Mischung aus Amidin bzw. Guanidin und (2,4,4-Trimethylpentyl)trimethoxysilan zu einer Mischung aus Zink(II)-acetylacetonat und Ethanol absolut gegeben wurde. Anschließend wurde durchmischt, falls erforderlich unter gleichzeitigem Erwärmen auf maximal 50°C, bis eine Lösung entstanden ist.

### Herstellung der Härtermischung in den Ausführungsbeispielen B7, B9, B10, B12, B13, B14, B15, B16, B17, B22, B23 und B24

Die Härtermischungen wurden hergestellt, indem in dieser Reihenfolge zuerst das Amidin bzw. das Guanidin und anschließend die gegebenenfalls eingesetzte organische Säure zu einer Mischung aus Metallverbindung in Methanol absolut hinzugefügt wurde. Anschließend wurde durchmischt, falls erforderlich unter gleichzeitigem Erwärmen auf maximal 50°C, bis eine Lösung entstanden ist.

### Herstellung der Härtermischung in dem Ausführungsbeispiel B21

Die Härtermischung wurde hergestellt, indem Zink(II)-(2-ethylhexanoat) zu einer Mischung aus Guanidin und (2,4,4-Trimethylpentyl)trimethoxysilan gegeben wurde. Anschließend wurde durchmischt bis eine Lösung entstanden ist.

### Herstellung der Härtermischung im Ausführungsbeispiel B25

Die Härtermischung wurde hergestellt, indem das Guanidin zu Bis(ethylacetoacetato)bis(propan-2-olato)titanium(IV) (TYTAN S2; CAS-Nr. 27858-32-8, käuflich erhältlich von der Firma Borica, 3950 Bocholt, Belgien) gegeben wurde. Anschließend wurde durchmischt bis eine Lösung entstanden ist.

### Herstellung der Härtermischung in den Vergleichsbeispielen V5, V6, V7, V8, V9, V10, V11, V12 und V13

Die Härtermischungen wurden hergestellt, indem das entsprechende Amidin bzw. Guanidin in (2,4,4-Trimethylpentyl)trimethoxysilan und Ethanol absolut oder in Methanol absolut gelöst wurde, oder indem die jeweilige Metallverbindung entweder in einer Mischung aus (2,4,4-Trimethylpentyl)trimethoxysilan und Ethanol absolut, oder in Methanol absolut unter Durchmischung gelöst wurde, falls erforderlich unter gleichzeitigem Erwärmen auf maximal 50°C.

### Beispiel B1

Für eine Gelzeitmessung wurden 0,04 g 1,1,3,3-Tetramethylguanidin ("TMG"; CAS-Nr. 80-70-6; käuflich erhältlich bei Sigma-Aldrich®, D-Steinheim) in 0,04 g (2,4,4-Trimethylpentyl)trimethoxysilan (CAS-Nr. 88468-45-5; käuflich erhältlich bei Sigma-Aldrich®, D-Steinheim) verdünnt und diese Lösung anschließend zu einer Mischung aus 0,092 g Zink(II)-acetylacetonat ("Zn(acac)₂", CAS-Nr. 14024-63-6, käuflich erhältlich z.B. bei der Firma Merck KGaA, D-Darmstadt) in 0,048 g Ethanol absolut (käuflich erhältlich bei Sigma-Aldrich®, D-Steinheim) gegeben; das Gemisch wurde unter Erwärmen auf 45°C innig gerührt bis eine Lösung entstanden ist. Die Katalysatorlösung wurde dann mit 10 g der Harzmischung A1 in einem Speedmixer™ DAC 150 FVZ von der Firma Hauschild & Co. KG 30 Sekunden bei 2000 U·min⁻¹ vermischt und die Mischung schließlich in ein Reagenzglas zur Gelzeitbestimmung überführt. Die Ergebnisse finden sich in Tabelle 1.

### Beispiel B2

Das Beispiel B1 wurde wiederholt mit dem Unterschied, dass anstelle einer Mischung von 0,092 g Zn(acac)₂ in 0,048 g Ethanol absolut eine Mischung von 0,061 g Zink(II)-(2-ethylhexanoat) (CAS-Nr. 136-53-8; käuflich erhältlich bei ABCR, D-Karlsruhe) in 0,024 g Ethanol absolut eingesetzt und bei 23°C gemischt wurde.
Die Ergebnisse finden sich in Tabelle 1.

### Beispiel B3

Das Beispiel B1 wurde wiederholt mit dem Unterschied, dass anstelle einer Lösung von 0,04 g 1,1,3,3-Tetramethylguanidin in 0,04 g (2,4,4-Trimethylpentyl)trimethoxysilan 0,043 g 1,5-Diazabicyclo[4.3.0]non-5-en ("BBN", CAS-Nr. 3001-72-7, käuflich erhältlich bei Sigma-Aldrich®, D-Steinheim) und anstelle einer Mischung von 0,092 g Zn(acac)₂ in 0,048 g Ethanol absolut eine Mischung von 0,092 g Zn(acac)₂ in 0,138 g Methanol absolut (käuflich erhältlich bei Sigma-Aldrich®, D-Steinheim) eingesetzt wurde.
Die Ergebnisse finden sich in Tabelle 1.

### Beispiel B4

Das Beispiel B1 wurde wiederholt mit dem Unterschied, dass anstelle von Harzmischung A1 Harzmischung A3 eingesetzt wurde. Die Ergebnisse finden sich in Tabelle 1.

### Beispiel B5

Das Beispiel B1 wurde wiederholt mit dem Unterschied, dass anstelle einer Mischung von 0,092 g Zn(acac)₂ in 0,048 g Ethanol absolut eine Mischung von 0,25 g Bismuth(III)-neodecanoat (CAS-Nr. 34364-26-6; käuflich erhältlich bei Sigma-Aldrich®, D-Steinheim) in 0,024 g Ethanol absolut eingesetzt und bei 23°C gemischt wurde.
Die Ergebnisse finden sich in Tabelle 1.

### Vergleichsbeispiel V1

Beispiel B1 wurde wiederholt mit dem Unterschied, dass kein Zn(acac)₂ eingesetzt und bei 23°C gemischt wurde.
Die Ergebnisse finden sich in Tabelle 1.

### Vergleichsbeispiel V2

Beispiel B1 wurde wiederholt mit dem Unterschied, dass kein TMG eingesetzt wurde.
Die Ergebnisse finden sich in Tabelle 1.

### Vergleichsbeispiel V3

Beispiel B2 wurde wiederholt mit dem Unterschied, dass kein TMG eingesetzt wurde.
Die Ergebnisse finden sich in Tabelle 1.

### Vergleichsbeispiel V4

Beispiel B3 wurde wiederholt mit dem Unterschied, dass kein Zn(acac)₂ eingesetzt wurde.
Die Ergebnisse finden sich in Tabelle 1.

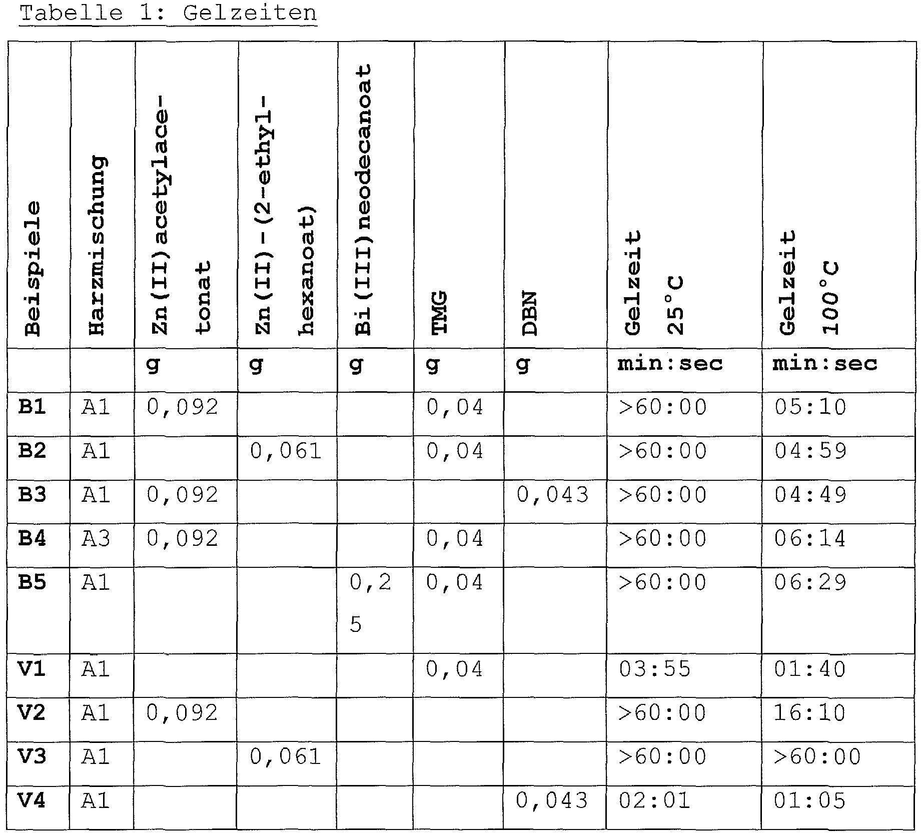

### Beispiel B6

100 g der Harzmischung A1 und 300 g Quarzmehl 16900 (käuflich erhältlich bei den Amberger Kaolinwerken, D-Hirschau) wurden in einem Speedmixer™ DAC 150 FVZ von der Firma Hauschild & Co. KG 30 Sekunden bei 3000 U·min⁻¹ vermischt. Die Mischung wurde anschließend stehen gelassen bis sie auf eine Temperatur von 23°C abgekühlt war.

Danach wurde als Härtermischung eine Lösung von 0,50 g 1,1,3,3-Tetramethylguanidin, 0,50 g (2,4,4-Trimethylpentyl)-trimethoxysilan, 1,14 g Zink(II)-acetylacetonat in 0,50 g Ethanol absolut zur zuvor beschriebenen Mischung bestehend aus A1 und Quarzmehl zugegeben.

Anschließend wurde die Mischung zunächst 15 Sekunden im Speedmixer™ bei 2000 U·min⁻¹ vermischt, dann kurz von Hand umgerührt und schließlich nochmals 15 Sekunden im Speedmixer™ bei 2000 U·min⁻¹ vermischt. Von der Mischung wurden die Verarbeitungszeit bestimmt und Prüfkörper hergestellt. Zur Herstellung der Prüfkörper wurde eine ölhydraulische Presse vom Typ VSKO 75 der Firma Lauffer GmbH & Co. KG benutzt. Die Presse war mit einem Werkzeug mit austauschbaren Formnestplatten nach DIN EN ISO 10724-1:2002-04 ausgerüstet, womit sich Prüfkörper in den Dimensionen Länge x Breite x Dicke = 80 mm x 10 mm x 4 mm (zur Testung der Biegefestigkeit) herstellen ließen. Die Form wurde hydraulisch geschlossen mit einer Schließkraft von 140 kN. Die Form hatte die Außenabmessungen Länge x Breite = 450 mm x 450 mm. Der Pressstempel hatte einen Durchmesser von 50 mm. Zum Herstellen der Prüfkörper wurden 100 g der oben beschriebenen Mischung eingefüllt und mit einer Presskraft von 5 kN in das jeweilige Formnest, welches auf eine Temperatur von 120°C vorgeheizt war, eingespritzt. Nachdem die Formnester vollständig ausgefüllt waren, stieg die Presskraft auf 25 kN an. An diesem Punkt wurde die Hydraulik abgeschaltet. Während der Aushärtung ließ die Kraft langsam nach und betrug am Ende des gesamten Press- und Aushärtevorgangs 14 kN. Nach 30 Minuten bei 120°C wurde das Werkzeug geöffnet und die Prüfkörper entnommen.

Die so erhaltenen Prüfkörper wurden hinsichtlich ihrer Eigenschaften überprüft. Die Ergebnisse finden sich in der Tabelle 2.

### Beispiel B7

Beispiel B6 wurde wiederholt mit dem Unterschied, dass als Härtermischung eine Lösung von 0,50 g 1,1,3,3-Tetramethylguanidin, 1,14 g Zink(II)-acetylacetonat in 1,00 g Methanol absolut eingesetzt wurde.
Die Ergebnisse finden sich in Tabelle 2.

### Beispiel B8

Beispiel B6 wurde wiederholt mit dem Unterschied, dass als Härtermischung eine Lösung von 0,80 g 1,1,3,3-Tetramethylguanidin, 0,80 g (2,4,4-Trimethylpentyl)trimethoxysilan, 1,36 g Zink(II)-acetylacetonat in 0,60 g Ethanol absolut eingesetzt wurde.
Die Ergebnisse finden sich in Tabelle 2.

### Beispiel B9

Beispiel B6 wurde wiederholt mit dem Unterschied, dass als Härtermischung eine Lösung von 0,50 g 1,1,3,3-Tetramethylguanidin, 0,57 g Zink(II)-acetylacetonat, 0,31 g n-Octansäure (CAS-Nr. 124-07-2; käuflich erhältlich bei Sigma-Aldrich®, D-Steinheim) in 0,24 g Methanol absolut eingesetzt wurde.
Die Ergebnisse finden sich in Tabelle 2.

### Beispiel B10

Beispiel B6 wurde wiederholt mit dem Unterschied, dass als Härtermischung eine Lösung von 0,50 g 1,1,3,3-Tetramethylguanidin, 1,14 g Zink(II)-acetylacetonat, 0,63 g n-Octansäure in 0,24 g Methanol absolut eingesetzt wurde.
Die Ergebnisse finden sich in Tabelle 2.

### Beispiel B11

Beispiel B6 wurde wiederholt mit dem Unterschied, dass als Härtermischung eine Lösung von 0,53 g 1,8-Diazabicyclo[5.4.0]-undec-7-en ("DBU"; CAS-Nr. 6674-22-2; käuflich erhältlich bei Sigma-Aldrich®, D-Steinheim)), 0,92 g Zink(II)-acetylacetonat, 0,50 g (2,4,4-Trimethylpentyl)trimethoxysilan in 0,90 g Ethanol absolut eingesetzt wurde.
Die Ergebnisse finden sich in Tabelle 2.

### Beispiel B12

Beispiel B6 wurde wiederholt mit dem Unterschied, dass als Härtermischung eine Lösung von 0,20 g 1,8-Diazabicyclo[5.4.0]undec-7-en, 0,20 g Zink(II)-acetylacetonat in 0,47 g Methanol absolut eingesetzt wurde.
Die Ergebnisse finden sich in Tabelle 2.

### Beispiel B13

Beispiel B6 wurde wiederholt mit dem Unterschied, dass als Härtermischung eine Lösung von 0,66 g 1,8-Diazabicyclo[5.4.0]-undec-7-en und 1,20 g Zink(II)-acetylacetonat in 2,80 g Methanol absolut eingesetzt wurde.
Die Ergebnisse finden sich in Tabelle 2.

### Beispiel B14

Beispiel B6 wurde wiederholt mit dem Unterschied, dass als Härtermischung eine Lösung von 0,43 g 1,5-Diazabicyclo[4.3.0]-non-5-en ("DBN"; CAS-Nr. 3001-72-7; käuflich erhältlich bei Sigma-Aldrich®, D-Steinheim) und 0,92 g Zink(II)-acetylacetonat in 1,38 g Methanol absolut eingesetzt wurde.
Die Ergebnisse finden sich in Tabelle 2.

### Beispiel B15

Beispiel B6 wurde wiederholt mit dem Unterschied, dass als Härtermischung eine Lösung von 0,60 g 1,5,7-triazabicyclo-[4.4.0]dec-5-en ("TBD"; CAS-Nr. 5807-14-7; käuflich erhältlich bei Sigma-Aldrich®, D-Steinheim) und 1,19 g Zink(II)-acetylacetonat in 1,82 g Methanol absolut eingesetzt wurde.
Die Ergebnisse finden sich in Tabelle 2.

### Beispiel B16

Beispiel B6 wurde wiederholt mit dem Unterschied, dass als Härtermischung eine Lösung von 0,60 g 7-Methyl-1,5,7-triazabicyclo[4.4.0]dec-5-en ("Me-TBD"; CAS-Nr. 84030-20-6; käuflich erhältlich bei Sigma-Aldrich®, D-Steinheim) und 1,19 g Zink-(II)-acetylacetonat in 0,50 g Methanol absolut eingesetzt wurde.
Die Ergebnisse finden sich in Tabelle 2.

### Beispiel B17

Beispiel B6 wurde wiederholt mit dem Unterschied, dass als Härtermischung eine Lösung von 0,38 g 1,4,5,6-Tetrahydropyrimidin ("THP"; CAS-Nr. 1606-49-1; käuflich erhältlich bei Sigma-Aldrich®, D-Steinheim) und 1,20 g Zink(II)-acetylacetonat in 2,80 g Methanol absolut eingesetzt wurde.
Die Ergebnisse finden sich in Tabelle 2.

### Beispiel B18

Beispiel B6 wurde wiederholt mit dem Unterschied, dass anstelle der Harzmischung A1 Harzmischung A2 und als Härtermischung eine Lösung von 0,40 g 1,1,3,3-Tetramethylguanidin, 0,92 g Zink(II)-acetylacetonat und 0,40 g (2,2,4-Trimethylpentyl)trimethoxysilan in 0,24 g Methanol absolut eingesetzt wurde.
Die Ergebnisse finden sich in Tabelle 2.

### Beispiel B19

Beispiel B6 wurde wiederholt mit dem Unterschied, dass anstelle der Harzmischung A1 Harzmischung A3 und als Härtermischung eine Lösung aus 0,40 g 1,1,3,3-Tetramethylguanidin, 0,46 g Zink(II)-acetylacetonat und 0,40 g (2,2,4-Trimethylpentyl)trimethoxysilan in 0,24 g Ethanol absolut eingesetzt wurde. Die Mischung wurde 60 min bei 120°C ausgehärtet.
Die Ergebnisse finden sich in Tabelle 2.

### Beispiel B20

300 g grobkörniger Quarz der Type "Quarzkies SB 1,5-2,2T" mit einer Korngröße von 1,5 mm bis 2,2 mm, 220 g grobkörniger Quarz der Type "Quarzsand SB 0,7-1,2T" mit einer Korngröße von 0,7 mm bis 1,2 mm, 210 g grobkörniger Quarz der Type "Quarzsand SB 0,3-0,9T" mit einer Korngröße von 0,3 mm bis 0,9 mm, alle drei käuflich erhältlich bei Amberger Kaolinwerke Eduard Kick GmbH & Co. KG in D-Hirschau, wurden in einem Trommelmischer vorgelegt und 1 Minute innig vermischt. Anschließend wurden 100 g Harzmischung A1, temperiert auf 23°C, zugegeben und weitere 3 Minuten gemischt. Danach wurde als Härtermischung eine Lösung von 0,52 g 1,1,3,3-Tetramethylguanidin und 1,20 g Zink(II)-acetylacetonat in 1,00 g Methanol absolut zugesetzt und nochmals 2 Minuten gemischt. Danach wurden 320 g feinteiliges Quarzmehl mit einer oberen Korngröße d_{95%} von 50 µm und einer mittleren Korngröße d_{50%} von 16 µm der Type "Millisil W12" (käuflich erhältlich bei Quarzwerke GmbH, D-Frechen) portionsweise in die Mischung eingemischt; abschließend wurde wiederum 2 Minuten gemischt. Diese Mischung, welche eine Konsistenz ähnlich nassem Sand aufwies, wurde in ein Formnest aus Edelstahl mit den Dimensionen Länge x Breite x Höhe = 220 mm x 170 mm x 15 mm eingefüllt. Die Masse wurde in der Form auf einem Rütteltisch mit einer Frequenz von 50 Hz innerhalb von 2 Minuten vorverdichtet. Anschließend wurde die Form in eine hydraulische Presse montiert und der Inhalt der Form mit einer Presskraft von 150 kN verdichtet. Das entspricht einem Pressdruck, bezogen auf die Oberfläche der herzustellenden Prüfplatte von 4000 kPa. Danach wurde die Form in einem Ofen für 45 Minuten bei 120°C gelagert. Nach Abkühlen auf Raumtemperatur wurde der Formkörper der Form entnommen, und der Formkörper wurde 4 Tage bei Umgebungstemperatur gelagert. Aus dem Formkörper wurden dann Probekörper der Dimension Länge x Breite x Höhe = 200 mm x 50 mm x 10 mm hergestellt. An diesen Probekörpern wurden die Shore-D-Härte sowie die Biegefestigkeit nach DIN EN 14617-2:2008-11 gemessen.
Die Ergebnisse finden sich in Tabelle 2.

### Beispiel B21

Beispiel B6 wurde wiederholt mit dem Unterschied, dass eine Härtermischung aus 0,50 g 1,1,3,3-Tetramethylguanidin, 1,53 g Zink(II)-(2-ethylhexanoat) und 0,50 g (2,4,4-Trimethylpentyl)-trimethoxysilan eingesetzt wurde.
Die Ergebnisse finden sich in Tabelle 2.

### Beispiel B22

Beispiel B6 wurde wiederholt mit dem Unterschied, dass als Härtermischung eine Lösung von 0,50 g 1,1,3,3-Tetramethylguanidin und 1,75 g Bismuth(III)-neodecanoat in 0,24 g Methanol absolut eingesetzt wurde.
Die Ergebnisse finden sich in Tabelle 2.

### Beispiel B23

Beispiel B6 wurde wiederholt mit dem Unterschied, dass als Härtermischung eine Lösung von 0,50 g 1,1,3,3-Tetramethylguanidin und 0,71 g Zirkonium(IV)-(2-ethylhexanoat) in 0,24 g Methanol absolut eingesetzt wurde.
Die Ergebnisse finden sich in Tabelle 2.

### Beispiel B24

Beispiel B6 wurde wiederholt mit dem Unterschied, dass als Härtermischung eine Lösung von 0,50 g 1,1,3,3-Tetramethylguanidin und 0,78 g Aluminium(III)-neodecanoat in 0,24 g Methanol absolut eingesetzt wurde.
Die Ergebnisse finden sich in Tabelle 2.

### Beispiel B25

Beispiel B6 wurde wiederholt mit dem Unterschied, dass eine Härtermischung aus 0,40 g 1,1,3,3-Tetramethylguanidin und 1,57 g Bis(ethylacetoacetato)bis(propan-2-olato)titanium(IV)) eingesetzt wurde.
Die Ergebnisse finden sich in Tabelle 2.

### Vergleichsbeispiel V5

Die in Beispiel B6 beschriebene Verfahrensweise wurde wiederholt mit der Abänderung, dass als Härtermischung eine Lösung von 0,50 g 1,1,3,3-Tetramethylguanidin und 0,50 g (2,4,4-Trimethylpentyl)trimethoxysilan in 0,50 g Ethanol absolut eingesetzt wurde.
Die Ergebnisse finden sich in Tabelle 2.

### Vergleichsbeispiel V6

Die in Beispiel B6 beschriebene Verfahrensweise wurde wiederholt mit der Abänderung, dass als Härtermischung eine Lösung von 0,20 g 1,8-Diazabicyclo[5.4.0]undec-7-en in 0,47 g Methanol absolut eingesetzt wurde.
Die Ergebnisse finden sich in Tabelle 2.

### Vergleichsbeispiel V7

Die in Beispiel B6 beschriebene Verfahrensweise wurde wiederholt mit der Abänderung, dass als Härtermischung eine Lösung von 0,43 g 1,5-Diazabicyclo[4.3.0]non-5-en in 0,66 g Methanol absolut eingesetzt wurde.
Die Ergebnisse finden sich in Tabelle 2.

### Vergleichsbeispiel V8

Die in Beispiel B6 beschriebene Verfahrensweise wurde wiederholt mit der Abänderung, dass als Härtermischung eine Lösung von 1,14 g Zink(II)-acetylacetonat und 0,50 g (2,4,4-Trimethylpentyl)trimethoxysilan in 0,50 g Ethanol absolut eingesetzt wurde.
Die Ergebnisse finden sich in Tabelle 2.

### Vergleichsbeispiel V9

Die in Beispiel B6 beschriebene Verfahrensweise wurde wiederholt mit der Abänderung, dass eine Härtermischung aus 1,53 g Zink(II)-(2-ethylhexanoat) und 0,50 g (2,4,4-Trimethylpentyl)-trimethoxysilan eingesetzt wurde.
Die Ergebnisse finden sich in Tabelle 2.

### Vergleichsbeispiel V10

Die in Beispiel B6 beschriebene Verfahrensweise wurde wiederholt mit der Abänderung, dass als Härtermischung eine Lösung von 1,75 g Bismuth(III)-neodecanoat in 0,24 g Methanol absolut eingesetzt wurde.
Die Ergebnisse finden sich in Tabelle 2.

### Vergleichsbeispiel V11

Beispiel B6 wurde wiederholt mit dem Unterschied, dass als Härtermischung eine Lösung von 1,42 g Zirkonium(IV)-(2-ethylhexanoat) in 0,24 g Methanol absolut eingesetzt wurde.
Die Ergebnisse finden sich in Tabelle 2.

### Vergleichsbeispiel V12

Beispiel B6 wurde wiederholt mit dem Unterschied, dass als Härtermischung eine Lösung von 1,56 g Aluminium(III)-neodecanoat in 0,24 g Methanol absolut eingesetzt wurde.
Die Ergebnisse finden sich in Tabelle 2.

### Vergleichsbeispiel V13

Beispiel B6 wurde wiederholt mit dem Unterschied, dass als Härter 1,57 g Bis(ethylacetoacetato)bis(propan-2-olato)titanium(IV) eingesetzt wurde.
Die Ergebnisse finden sich in Tabelle 2.

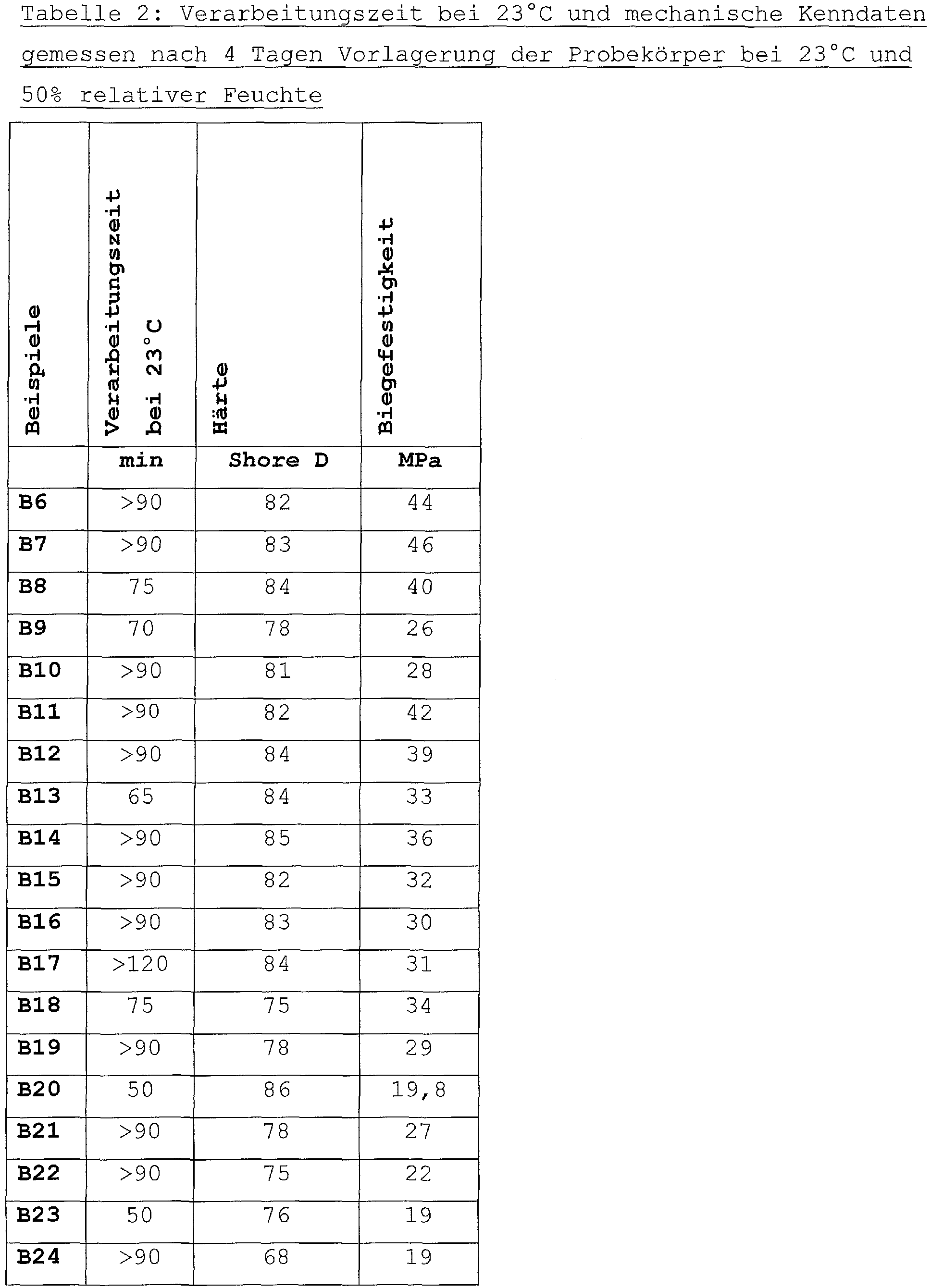

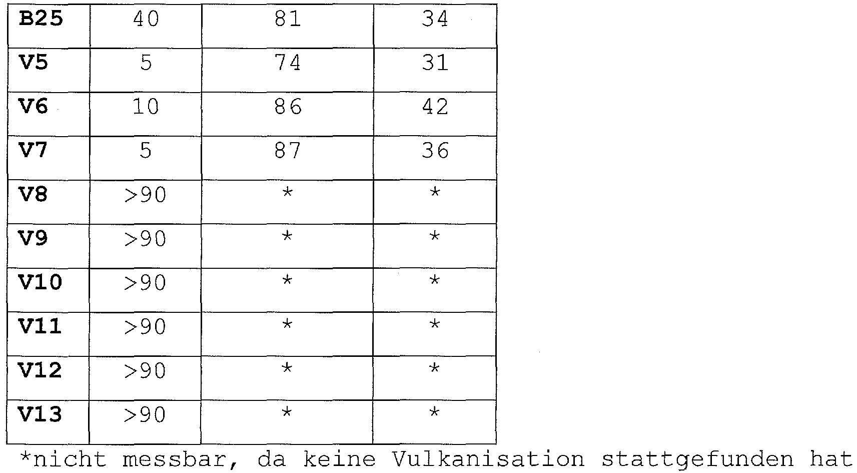

## Patentansprüche

1. Durch Kondensationsreaktion vernetzbare Zusammensetzungen (Z) enthaltend
(A) mindestens eine Organosiliciumkomponente bestehend aus Einheiten der Formel
Rₐ(OH)_{b}(R¹O)_{c}SiO_{(4-a-b-c)/2} (I),
worin
R gleich oder verschieden sein kann und einen einwertigen, SiC-gebundenen, gegebenenfalls substituierten Kohlenwasserstoffrest mit 1 bis 18 C-Atomen, einen zweiwertigen, gegebenenfalls substituierten, SiC-gebundenen Kohlenwasserstoffrest mit 1 bis 18 C-Atomen oder Si-gebundenes Halogenatom bedeutet,
R¹ gleich oder verschieden sein kann und einen einwertigen, gegebenenfalls substituierten Kohlenwasserstoffrest bedeutet,
a 0, 1, 2 oder 3 ist,
b 0, 1, 2 oder 3 ist und
c 0, 1, 2 oder 3 ist,
mit der Maßgabe, dass in Formel (I) die Summe a+b+c<4 ist,
in der Organosiliciumkomponente (A) der Verzweigungsgrad, definiert als das Verhältnis aus der Summe der Einheiten der Formel (I) mit a gleich 0 oder 1 zu der Summe aller-Einheiten der Formel (I), mindestens 0,5 beträgt und in der Organosiliciumkomponente (A) in mindestens 1% aller Einheiten der Formel (I) die Summe b+c ≥1 ist,
(B) mindestens eine Metallverbindung ausgewählt aus Verbindungen von Metallen der 3., 4. und 5. Hauptgruppe sowie der 2., 4., 5., 7. und 8. Nebengruppe in den Oxidationsstufen +2 bis +5, die mindestens ein Kohlenstoffatom enthalten in einer Oxidationsstufe <4, und
(C) mindestens eine Stickstoffverbindung, ausgewählt aus Guanidinen und Amidinen.

2. Zusammensetzungen gemäß Anspruch 1, **dadurch gekennzeichnet, dass** die Organosiliciumkomponente (A) sowohl Si-gebundene Hydroxy- als auch Si-gebundene (R¹O)-Gruppen aufweist.

3. Zusammensetzungen gemäß Anspruch 1 oder 2, **dadurch gekennzeichnet, dass** die Organosiliciumkomponente (A) Einheiten ausgewählt aus RSiO_{3/2}, RSi(OR¹)O_{2/2}, RSi(OH)O_{2/2}, RSi(OR¹)₂O_{1/2}, RSi(OH)(OR¹)O_{1/2}, R₂SiO_{2/2}, R₂(OH)SiO_{1/2}, R₂(OR¹)SiO_{1/2}, R₃SiO_{1/2}, SiO_{4/2}, Si(OH)O_{3/2}, Si(OR¹)O_{3/2}, Si(OR¹)₂O_{2/2}, Si(OR¹)(OH)O_{2/2}, Si(OR¹)₂(OH)O_{1/2}, Si(OR¹)₃O_{1/2} und O_{3/2}SiRSiO_{3/2} enthält.

4. Zusammensetzungen gemäß einem oder mehreren der Ansprüche 1 bis 3, **dadurch gekennzeichnet, dass** es sich bei den Metallverbindungen (B) um Aluminium(III)-, Bismuth(III)-, Eisen(II)-, Eisen(III)-, Mangan(II)-, Mangan(III)-, Titan(III)-, Titan(IV)-, Vanadium(III)-, Vanadium(IV)-, Vanadium(V)-, Zink(II)-, Zinn(II)-, Zinn(IV)-, Zirkonium(IV)-, Tantal(V)- oder Niob(V)-Verbindungen handelt.

5. Zusammensetzungen gemäß einem oder mehreren der Ansprüche 1 bis 4, **dadurch gekennzeichnet, dass** es sich bei Metallverbindungen (B) um Metallsalzverbindungen (B-1) handelt.

6. Zusammensetzungen gemäß einem oder mehreren der Ansprüche 1 bis 4, **dadurch gekennzeichnet, dass** es sich bei Metallverbindungen (B) um Metall-Chelat-Verbindungen (B-2) der Formel (II) 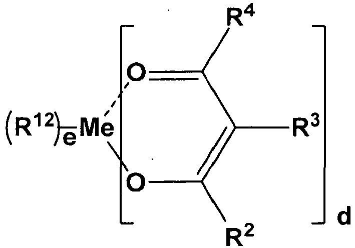 handelt, worin
Me Metall ausgewählt aus denen der 3., 4. und 5. Hauptgruppe sowie der 2., 4., 5., 7. und 8. Nebengruppe in der Oxidationsstufe +2 bis +5 bedeutet,
R², R³, und R⁴ jeweils unabhängig voneinander Wasserstoffatom, gegebenenfalls substituierten Kohlenwasserstoffrest oder Organyloxyrest bedeuten,
R¹² gleich oder verschieden sein kann und Organyloxidrest oder Oxid-Rest bedeutet,
d 1, 2, 3 oder 4 ist und
e 0, 1, 2, 3 oder 4 ist,
mit der Maßgabe, dass die Summe d+e 2 bis 6 ist.

7. Zusammensetzungen gemäß einem oder mehreren der Ansprüche 1 bis 6, **dadurch gekennzeichnet, dass** Stickstoffverbindungen (C) in Mengen von 0,1 bis 10,0 Mol, bezogen auf 1,0 Mol Metallverbindung (B) eingesetzt werden.

8. Zusammensetzungen gemäß einem oder mehreren der Ansprüche 1 bis 7, **dadurch gekennzeichnet, dass** es sich um solche handelt, die
(A) Organosiliciumkomponente,
(B) Metallverbindung,
(C) Stickstoffverbindung,
gegebenenfalls (D) Lösungsmittel,
(E) Füllstoffe,
gegebenenfalls (F) Silane,
gegebenenfalls (G) organische Säure und
gegebenenfalls (H) weitere Bestandteile
enthalten.

9. Verfahren zur Herstellung der Zusammensetzungen gemäß einem oder mehreren der Ansprüche 1 bis 8 durch Mischen der einzelnen Komponenten. in beliebiger Reihenfolge und auf bisher bekannte Art und Weise.

10. Formkörper hergestellt durch Vernetzung der Zusammensetzungen gemäß einem oder mehreren der Ansprüche 1 bis 8 bzw. hergestellt nach Anspruch 9.

11. Verfahren zur Herstellung von künstlichen Steinen, **dadurch gekennzeichnet, dass** die Zusammensetzungen gemäß einem oder mehreren der Ansprüche 1 bis 8 bzw. hergestellt nach Anspruch 9 geformt und vernetzen gelassen werden.

## Claims

1. Compositions (Z) crosslinkable by condensation reaction and comprising
(A) at least one organosilicon component consisting of units of the formula
Rₐ(OH)_{b}(R¹O)_{c}SiO_{(4-a-b-c)/2} (I),
in which
R may be identical or different and is monovalent, SiC-bonded, optionally substituted hydrocarbon radical having 1 to 18 C atoms, a divalent, optionally substituted, SiC-bonded hydrocarbon radical having 1 to 18 C atoms, or Si-bonded halogen atom,
R¹ may be identical or different and is a monovalent, optionally substituted hydrocarbon radical,
a is 0, 1, 2 or 3,
b is 0, 1, 2 or 3, and
c is 0, 1, 2 or 3,
with the proviso that in formula (I) the sum a + b + c < 4,
in the organosilicon component (A) the degree of branching, defined as the ratio of the sum of the units of the formula (I) where a is 0 or 1 to the sum of all units of the formula (I), is at least 0.5, and in the organosilicon component (A) in at least 1% of all units of the formula (I) the sum b + c ≥ 1,
(B) at least one metal compound selected from compounds of metals from main groups 3, 4, and 5 and also from transition groups 2, 4, 5, 7, and 8 in the +2 to +5 oxidation states, which comprise at least one carbon atom in a < 4 oxidation state, and
(C) at least one nitrogen compound selected from guanidines and amidines.

2. Compositions according to Claim 1, **characterized in that** the organosilicon component (A) contains not only Si-bonded hydroxyl but also Si-bonded (R¹O) groups.

3. Compositions according to Claim 1 or 2, **characterized in that** the organosilicon component (A) comprises units selected from RSiO_{3/2}, RSi(OR¹)O_{2/2}, RSi(OH)O_{2/2}, RSi(OR¹)₂O_{1/2}, RSi(OH)(OR¹)O_{1/2}, R₂SiO_{2/2}, R₂(OH)SiO_{1/2}, R₂(OR¹)SiO_{1/2}, R₃SiO_{1/2}, SiO_{4/2}, Si(OH)O_{3/2}, Si(OR¹)O_{3/2}, Si(OR¹)₂O_{2/2}, Si(OR¹)(OH)O_{2/2}, Si(OR¹)₂(OH)O_{1/2}, Si(OR¹)₃O_{1/2}, and O_{3/2}SiRSiO_{3/2}.

4. Compositions according to one or more of Claims 1 to 3, **characterized in that** the metal compounds (B) are aluminum(III), bismuth(III), iron(II), iron(III), manganese(II), manganese(III), titanium(III), titanium(IV), vanadium(III), vanadium(IV), vanadium(V), zinc(II), tin(II), tin(IV), zirconium(IV), tantalum(V) or niobium(V) compounds.

5. Compositions according to one or more of Claims 1 to 4, **characterized in that** metal compounds (B) are metal salt compounds (B-1).

6. Compositions according to one or more of Claims 1 to 4, **characterized in that** metal compounds (B) are metal chelate compounds (B-2) of the formula (II) 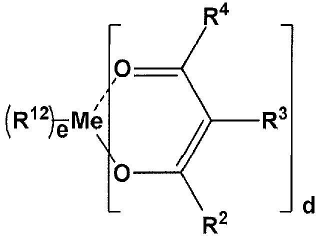 in which
Me is metal selected from those of main groups 3., 4., and 5. and also transition groups 2., 4., 5., 7., and 8. in the +2 to +5 oxidation state,
R², R³, and R⁴ each independently of one another are hydrogen atom, optionally substituted hydrocarbon radical or organyloxy radical,
R¹² may be identical or different and is organyl oxide radical or oxide radical,
d is 1, 2, 3 or 4, and
e is 0, 1, 2, 3 or 4,
with the proviso that the sum d + e is 2 to 6.

7. Compositions according to one or more of Claims 1 to 6, **characterized in that** nitrogen compounds (C) are used in amounts of 0.1 to 10.0 mol per 1.0 mol of metal compound (B).

8. Compositions according to one or more of Claims 1 to 7, **characterized in that** it is a composition comprising
(A) organosilicon component,
(B) metal compound,
(C) nitrogen compound,
optionally (D) solvents,
(E) fillers,
optionally (F) silanes,
optionally (G) organic acid, and
optionally (H) further constituents.

9. Method for producing the compositions according to one or more of Claims 1 to 8 by mixing the individual components in any order and in conventional fashion.

10. Shaped article produced by crosslinking the compositions according to one or more of Claims 1 to 8 or produced according to Claim 9.

11. Method for producing artificial stones, **characterized in that** the compositions according to one or more of Claims 1 to 8 or produced according to Claim 9 are shaped and allowed to crosslink.

## Revendications

1. Compositions (Z) réticulables par une réaction de condensation, contenant :
(A) au moins un composant organosilicium constitué par des unités de formule
Rₐ(OH)_{b}(R¹O)_{c}SiO_{(4-a-b-c)/2} (I)
dans laquelle
les R peuvent être identiques ou différents, et signifient un radical hydrocarboné monovalent, relié au SiC, éventuellement substitué, de 1 à 18 atomes C, un radical hydrocarboné bivalent relié au SiC, éventuellement substitué, de 1 à 18 atomes C, ou un atome d'halogène relié au Si,
les R¹ peuvent être identiques ou différents, et signifient un radical hydrocarboné monovalent, éventuellement substitué,
a représente 0, 1, 2 ou 3,
b représente 0, 1, 2 ou 3, et
c représente 0, 1, 2 ou 3,
à condition que, dans la formule (I), la somme a+b+c < 4, que, dans le composant organosilicium (A), le degré de ramification, défini comme le rapport entre la somme des unités de formule (I) avec a valant 0 ou 1 et la somme de toutes les unités de formule (I), soit d'au moins 0,5, et que, dans le composant organosilicium (A), dans au moins 1 % de toutes les unités de formule (I), la somme b+c ≥ 1,
(B) au moins un composé métallique choisi parmi les composés de métaux des groupes principaux 3, 4 et 5, ainsi que des groupes de transition 2, 4, 5, 7 et 8 aux degrés d'oxydation +2 à +5, qui contiennent au moins un atome de carbone à un degré d'oxydation < 4, et
(C) au moins un composé d'azote, choisi parmi les guanidines et les amidines.

2. Compositions selon la revendication 1, **caractérisées en ce que** le composant organosilicium (A) comprend aussi bien des groupes hydroxy reliés au Si que des groupes (R¹O) reliés au Si.

3. Compositions selon la revendication 1 ou 2, **caractérisées en ce que** le composant organosilicium (A) contient des unités choisies parmi RSiO_{3/2}, RSi (OR¹) O_{2/2}, RSi(OH)O_{2/2}, RSi(OR¹)₂O_{1/2}, RSi(OH)(OR¹)O_{1/2}, R₂SiO_{2/2}, R₂(OH)SiO_{1/2}, R₂(OR¹)SiO_{1/2}, R₃SiO_{1/2}, SiO_{4/2}, Si(OH)O_{3/2}, Si(OR¹)O_{3/2}, Si(OR¹)₂O_{2/2}, Si(OR¹)(OH)O_{2/2}, Si(OR¹)₂(OH)O_{1/2}, Si(OR¹)₃O_{1/2} et O_{3/2}SiRSiO_{3/2}.

4. Compositions selon une ou plusieurs des revendications 1 à 3, **caractérisées en ce que** les composés métalliques (B) sont des composés d'aluminium (III), de bismuth (III), de fer (II), de fer (III), de manganèse (II), de manganèse (III), de titane (III), de titane (IV), de vanadium (III), de vanadium (IV), de vanadium (V), de zinc (II), d'étain (II), d'étain (IV), de zirconium (IV), de tantale (V) ou de niobium (V).

5. Compositions selon une ou plusieurs des revendications 1 à 4, **caractérisées en ce que** les composés métalliques (B) sont des composés de sels métalliques (B-1).

6. Compositions selon une ou plusieurs des revendications 1 à 4, **caractérisées en ce que** les composés métalliques (B) sont des composés de chélates métalliques (B-2) de formule (II) 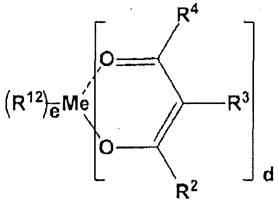 dans laquelle
Me signifie un métal choisi parmi les groupes principaux 3, 4 et 5, ainsi que les groupes de transition 2, 4, 5, 7 et 8 aux degrés d'oxydation +2 à +5,
R², R³ et R⁴ signifient chacun indépendamment les uns des autres un atome d'hydrogène, un radical hydrocarboné éventuellement substitué ou un radical organyloxy,
les R¹² peuvent être identiques ou différents, et signifient un radical organyloxy ou un radical oxyde,
d signifie 1, 2, 3 ou 4, et
e signifie 0, 1, 2, 3 ou 4,
à condition que la somme d+e soit de 2 à 6.

7. Compositions selon une ou plusieurs des revendications 1 à 6, **caractérisées en ce que** les composés d'azote (C) sont utilisés en quantités de 0,1 à 10,0 moles, par rapport à 1,0 mole de composé métallique (B) .

8. Compositions selon une ou plusieurs des revendications 1 à 7, **caractérisées en ce qu'**il s'agit de compositions qui contiennent :
(A) un composant organosilicium,
(B) un composé métallique,
(C) un composé d'azote,
éventuellement (D) un solvant,
(E) des charges,
éventuellement (F) des silanes,
éventuellement (G) un acide organique et
éventuellement (H) d'autres constituants.

9. Procédé de fabrication de compositions selon une ou plusieurs des revendications 1 à 8 par mélange des composants individuels dans un ordre quelconque et d'une manière déjà connue.

10. Corps moulé fabriqué par réticulation des compositions selon une ou plusieurs des revendications 1 à 8 ou fabriquées selon la revendication 9.

11. Procédé de fabrication de pierres synthétiques, **caractérisé en ce que** les compositions selon une ou plusieurs des revendications 1 à 8 ou fabriquées selon la revendication 9 sont façonnées et laissées réticuler.
